(19) Europäisches Patentamt
European Patent Office
Office européen des brevets

(11) **EP 1 839 499 A1**

(12) **EUROPEAN PATENT APPLICATION**
published in accordance with Art. 158(3) EPC

(43) Date of publication:
**03.10.2007 Bulletin 2007/40**

(51) Int Cl.:
*A23L 1/05* (2006.01)        *A61K 9/10* (2006.01)
*A61K 47/36* (2006.01)       *A61K 47/38* (2006.01)
*C08L 5/00* (2006.01)

(21) Application number: **05814199.5**

(22) Date of filing: **06.12.2005**

(86) International application number:
**PCT/JP2005/022359**

(87) International publication number:
**WO 2006/062089 (15.06.2006 Gazette 2006/24)**

(84) Designated Contracting States:
**AT BE BG CH CY CZ DE DK EE ES FI FR GB GR
HU IE IS IT LI LT LU LV MC NL PL PT RO SE SI
SK TR**

(30) Priority: **06.12.2004 JP 2004352169
02.02.2005 JP 2005025915
28.03.2005 JP 2005090467
28.03.2005 JP 2005090487
29.06.2005 JP 2005189241**

(71) Applicant: **Asahi Kasei Chemicals Corporation
Tokyo 100-8440 (JP)**

(72) Inventor: **AKIMOTO, Mitsuyo,
Asahi Kasei Kabushiki Kaisha
Chiyoda-ku, Tokyo 1008440 (JP)**

(74) Representative: **Bradley, Josephine Mary et al
D Young & Co
120 Holborn
London EC1N 2DY (GB)**

(54) **COMPOSITION COMPOSED OF HIGHLY DISPERSIBLE CELLULOSE COMPLEX AND POLYSACCHARIDE**

(57)     [PROBLEMS]
To provide a stabilizer for stable retention and/or immobilization of grains of flesh, etc. of foods, and provide a thickening agent capable of imparting viscosity through addition of a small amount thereof.
[MEANS FOR SOLVING PROBLEMS]
There is provided a composition comprising a polysaccharide and a highly dispersible cellulose complex composed of a hydrophilic substance, a water-soluble polymer and a water-dispersible cellulose being fine-fibrous cellulose from plant cell walls as a raw material. Further, there are provided a stabilizer and thickening agent comprising the above composition.

EP 1 839 499 A1

**Description**

TECHNICAL FIELD

The present invention relates to a composition comprising a water-dispersible cellulose or a highly dispersible cellulose complex consisting of a water-dispersible cellulose, a water-soluble polymer and a hydrophilic substance, which is a fine-fibrous cellulose, and at least one kind of polysaccharide, characterized in that the composition has a grain immobilization ability, or high thickening ability and structural viscosity.

BACKGROUND ART

Conventionally, polysaccharides such as galactomannan, glucomannan and xanthan gum have been used as a thickening agent to thicken a food or similar product. If trying to impart a grain immobilization ability, such as preventing sedimentation or floating of fruit pulp or the like just by using these polysaccharides, it is necessary to impart very high viscosity. This results in a deterioration in liquid drainability, whereby the texture in food items worsens as a consequence of a sense of pasty feeling, and the commercial value is harmed. Thus, there is a need for a stabilizer which has good liquid drainability without any sense of pasty feeling, which at the same time retains the grains in the food item in a stable manner. Meanwhile, the amount of thickening agent which can be added into a food item is generally restricted by product design, so that there is a need for a thickening agent which can exhibit a desired thickening effect using the smallest amount possible.

Materials such as microfibrous cellulose and cellulose nanofibrils are known as fine-fibrous cellulose made from plant cell walls as a raw material. While fine-fibrous cellulose is appreciated for its fairly high thickening effects, because it has a higher price than a typical polysaccharide, in view of cost it is difficult to use alone. Further, as will be described below, since the "fineness" of such cellulose is insufficient, the roughness of the cellulose fibers can be felt, thus causing a sense of unease in the texture. As a stabilizer or a thickening agent, the applications in which such cellulose can be used are very limited.

Examples of known thickening agents containing microfibrillated cellulose and a polysaccharide include those disclosed in Patent Documents 1 to 3. The effects shown in these documents include "lump prevention" and "effects on intestinal function", but no mention is made of obtaining a thickening synergistic effect or that the added amount of thickening agent can be reduced by using together with a specific polysaccharide. Further, Patent Documents 4 and 5 describe a composition wherein cellulose nanofibrils obtained from cells comprising about 80% or more of primary wall are blended with other additives. However, the main purposes of the additive blending are only to improve re-dispersibility of a dry product and compensate the function of the cellulose nanofibrils.

Patent Document 6 describes a gel-forming composition containing a water-dispersible dry composition and a polysaccharide. However, the structure of the water-dispersible dry composition described in the Examples of Patent Document 6 only consists of two components, water-dispersible cellulose and the water-soluble polymer sodium carboxymethyl cellulose. If such a water-dispersible dry composition is dispersed in ion exchanged water by a very strong shear force, which would be industrially unrealistic, using a strong apparatus such as an Ace Homogenizer (manufactured by Nippon Seiki, Co., Ltd.), the particles are disintegrated and a fine-fibrous cellulose disperses in the water. However, if dispersed by a shear force under industrially practical dispersion conditions, i.e. in ordinary tap water by a shear force of that from a rotational homogenizer (e.g. "T.K. HOMO MIXER", manufactured by Primix Corporation) which is generally used in industry, the particles do not sufficiently disintegrate. Thus, since dispersion is not sufficient, performance as a stabilizer or a thickening agent cannot be sufficiently exhibited even if used together with a polysaccharide.

Further, in Comparative example 2 of Patent Document 7, it is described that an aqueous dispersion having a 1% by weight solid component consisting of the microfibrillated cellulose of the present application and guar gum adjusted in a 9:1 weight ratio turns into a viscous liquid. However, compared with guar gum, microfibrillated cellulose itself has a high thickening effect. Thus, there is a synergistic effect, but the thickening effect of guar gum about 10% those of microfibrillated cellulose. At that level of thickening effect, in terms of cost the composition is not a desirable substitute material for food items. In addition, since the effect was quite low, at the time it was not known whether there was in fact a synergistic effect. Specifically, the difference was difficult to distinguish by human senses such as vision or the like.

In view of this, the below-described highly dispersible cellulose complex used as a structural component of the composition according to the present invention comprises as essential components water-dispersible cellulose, a waster-soluble polymer and a hydrophilic substance. By comprising all of these three components, particles are disintegrated even under practical dispersion conditions, and good dispersibility is exhibited. As a result, performance as a stabilizer or thickening agent can be sufficiently exhibited when used together with a polysaccharide.

It has also been reported that if the gel-forming composition of Patent Document 6 containing a water-dispersible dry composition and a polysaccharide is added, and the resultant aqueous dispersion is left to stand, the dispersion forms a "true gel". The composition according to the present invention differs from that dispersion in not allowing a gel to form, or in other words, maintaining the fluid properties of the aqueous dispersion added to the composition or the liquid-state composition, and thus not allowing a true gel to be formed. If a gel does form, fluid properties are lost, meaning that the dispersion is not longer a liquid, and thus loses its food item function and physical properties as a liquid-state composition. This is a very serious problem.

Patent Document 1: Japanese Patent No. 1731182
Patent Document 2: JP-A-60-260517
Patent Document 3: Japanese Patent No. 1850006
Patent Document 4: JP-A-2001-520180
Patent Document 5: Japanese Patent No. 3247391
Patent Document 6: JP-A-2004-41119
Patent Document 7: JP-A-2004-248536

DISCLOSURE OF THE INVENTION

Problems to be Solved by the Invention

It is an object of the present invention to provide a stabilizer for stable retention and/or immobilization of grains of fruit flesh or the like in food items, and provide a thickening agent capable of imparting viscosity through addition of a small amount thereof.

Means for Solving the Problems

The present invention provides a composition comprising a polysaccharide and a highly dispersible cellulose complex consisting of a water-dispersible cellulose which is a fine-fibrous cellulose made from plant cell walls as a raw material, a water-soluble polymer and a hydrophilic substance. The present invention further provides a stabilizer and thickening agent comprising the above composition. Specifically, the present invention is as follows.
(1) A composition comprising a highly dispersible cellulose complex and a polysaccharide in a weight ratio of 1:9 to 8:2, wherein the highly dispersible cellulose complex is a dry composition consisting of:

i) 50 to 95% by weight of a water-dispersible cellulose;
ii) 1 to 49% by weight of a water-soluble polymer; and
iii) 1 to 49% by weight of a hydrophilic substance, the water-dispersible cellulose originating from plant cell walls as a raw material and being a fine-fibrous cellulose having a major axis of 0.5 to 30 $\mu$m, a minor axis of 2 to 600 nm, and a major axis/minor axis ratio of 20 to 400, the water-dispersible cellulose component comprising 10% by weight or more of a component stably suspensible in water, and having a loss tangent of less than 1 when formed as a 0.5% by weight aqueous dispersion.

(2) The composition according to item 1, wherein the highly dispersible cellulose complex is a dry composition consisting of:

i) 55 to 85% by weight of a water-dispersible cellulose;
ii) 1 to 30% by weight of a water-soluble polymer; and
iii) 5 to 40% by weight of a hydrophilic substance.

(3) The composition according to item 1 having a weight ratio of the water-dispersible cellulose: the total of the water-soluble polymer and the hydrophilic substance: the polysaccharide of 0.5:0.5:9 to 7.6:0.4:2.
(4) The composition according to item 1 having a weight ratio of the water-dispersible cellulose: the total of the water-soluble polymer and the hydrophilic substance: the polysaccharide of 0.55:0.45:9 to 6.8:1.2:2.
(5) A stabilizer for grain immobilizing which comprises the composition according to any one of items 1 to 4, wherein the polysaccharide contains at least one selected from the group consisting of galactomannan, glucomannan, sodium alginate, tamarind seed gum, pectin, carrageenan, gellan gum, agar, sodium carboxymethyl cellulose, soybean water-soluble polysaccharide, karaya gum, psyllium seed gum, pullulan, gum arabic, tragacanth gum, gum ghatti, arabinogalactan and curdlan.
(6) A stabilizer for grain immobilizing which comprises the composition according to any one of items 1 to 4, wherein the polysaccharide contains at least one selected from the group consisting of galactomannan, glucomannan, sodium alginate, tamarind seed gum, gellan gum, sodium carboxymethyl cellulose, soybean water-soluble polysaccharide, karaya gum and gum arabic.

(7) A thickening agent which comprises the composition according to any one of items 1 to 4, wherein the polysaccharide contains at least one selected from the group consisting of galactomannan, glucomannan, sodium alginate, tamarind seed gum, pectin, carrageenan, gellan gum, agar, sodium carboxymethyl cellulose, soybean water-soluble polysaccharide, karaya gum, psyllium seed gum, pullulan, gum arabic, tragacanth gum, gum ghatti, arabinogalactan and curdlan.

(8) A thickening agent which comprises the composition according to any one of items 1 to 4, wherein the polysaccharide contains at least one selected from the group consisting of galactomannan, glucomannan, sodium alginate, tamarind seed gum, gellan gum, sodium carboxymethyl cellulose, soybean water-soluble polysaccharide, karaya gum and gum arabic.

(9) The composition according to any one of items 1 to 4, wherein the water-dispersible cellulose comprises 30% by weight or more of a component stably suspensible in water.

(10) The composition according to any one of items 1 to 3, wherein the composition can easily disperse in an aqueous 0.01% calcium chloride solution.

(11) The composition according to any one of items 1 to 4, wherein the water-dispersible cellulose has a crystallinity exceeding 50%.

(12) The composition according to any one of items 1 to 4, wherein the water-soluble polymer is at least one selected from the group consisting of gum arabic, xanthan gum, sodium carboxymethyl cellulose, gellan gum, and indigestible dextrin.

(13) The composition according to any one of items 1 to 4, wherein the hydrophilic substance is at least one selected from dextrins and trehalose.

(14) A food item comprising the composition according to any one of items 1 to 3, 9 and 10, the stabilizer according to item 5 or 6, or the thickening agent according to item 7 or 8.

BEST MODE FOR CARRYING OUT THE INVENTION

The present invention will be now described in detail by especially focusing on preferable embodiments thereof. The water-dispersible cellulose according to the present invention is made from plant cell walls as a raw material. Preferred materials are those that can be acquired as a raw material cheaply and which are capable of being used industrially. Specific example include pulp composed mainly of natural celluloses, such as timber (coniferous trees and broad leaved trees), cotton linter, kenaf, Manila hemp (abacca), sisal hemp, jute, Savai grass, esparto grass, bagasse, rice plant straw, wheat straw, reed, bamboo and the like. Although raw cotton, papilus grass, beet, paper mulberry, paper bush, gampi, etc., are also usable, their use is sometimes not preferred because these raw materials are difficult to obtain stably, they contain non-cellulose components in a large amount, and they are difficult to handle. When regenerated cellulose is used as a raw material, a sufficient performance is not exhibited, and thus regenerated cellulose is not included as a raw material of the present invention. Preferred specific examples of the raw material include wood pulp, cotton linter pulp, bagasse pulp, wheat straw pulp, rice plant straw pulp, bamboo pulp and the like. Especially preferred are cellulosic substances made from a graminoid starting material. Specific examples are bagasse pulp, wheat straw pulp, rice plant straw pulp and bamboo pulp.

The crystallinity of the fine-fibrous cellulose used in the present invention as measured by X-ray diffraction (Segal method) exceeds 50%, and is preferably 55% or more. Although the highly dispersible cellulose complex used in the present invention contain non-cellulose components, those components are non-crystalline, and are thus counted as non-crystalline.

The water-dispersible cellulose used in the present invention is in a fine-fibrous state. As used in the present application, the term "fine-fibrous" means that length (major axis) is about 0.5 $\mu$m to 1 mm, width (minor axis) is about 2 nm to 60 $\mu$m, and the ratio of length to width (major axis/minor axis) is about 5 to 400, as observed and measured by an optical microscope and an electron microscope.

The water-dispersible cellulose or highly dispersible cellulose complex of the present invention contains a component stably suspensible in water. The term "component stably suspensible in water" specifically means a component which is stably suspended in water without sedimentation, even when it is made into an aqueous dispersion having a concentration of 0.1% by weight and the resulting dispersion is centrifuged at 1,000 G for 5 minutes. Such a component is composed of a fibrous cellulose having a length (major axis) of 0.5 to 30 $\mu$m and a width (minor axis) of 2 to 600 nm, and a length/width ratio (major axis/minor axis) of 20 to 400, as observed and measured by a high-resolution scanning electron microscope (SEM). The width is preferably 100 nm or less, and more preferably, 50 nm or less.

The water-dispersible cellulose or highly dispersible cellulose complex used as a structural component of the composition according to the present invention contains the "component stably suspensible in water" in an amount of 30% by weight or more. If the content of this component is less than 30% by weight, the above-described functions are not exhibited sufficiently. The higher the content of the "component stably suspensible in water", the better. It is, however, more preferable that the content is 50% by weight or more. Unless stated otherwise, the content of this component is expressed as a percentage of the amount present in all of the cellulose. Even if the water-soluble component is contained, the content is measured and calculated so that this component is not included.

The water-dispersible cellulose or highly dispersible cellulose complex used as a structural component of the composition according to the present invention exhibits, when made into an aqueous dispersion having a concentration of 0.5% by weight, a loss tangent (tan $\delta$) of less than 1 and preferably less than 0.6, as measured at a strain 10% and frequency 10 rad/s. If the loss tangent is less than 0.6, the performance of the composition becomes even better. If the loss tangent is 1 or higher, the below-described viscosity thickening function cannot be sufficiently expressed.

In order for the water-dispersible cellulose or highly dispersible cellulose complex used as a structural component of the composition to exhibit a loss tangent (tan $\delta$) of less than 1, it is necessary to remove the microfibrils which are derived from plant cell walls without cutting them shorter. However, with current technology, it is impossible to only carry out "miniaturization" without also shortening the fibers (here, "shortening the fibers" refers to where the fibers have been cut shorter, or the state where the fibers have become shorter; and "miniaturization" refers to where the fibers have become finer by imparting a tearing-apart or similar effect, or the state where the fibers have become finer). In other words, to make the loss tangent (tan $\delta$) less than 1, it is important to proceed with "miniaturization" while suppressing as much as possible the shortening of the fibers. A preferable method for achieving this will be described below, although the present invention is not limited to that method.

To proceed with "miniaturization" while suppressing as much as possible the shortening of the cellulose fibers, the cellulosic substance using plant cell walls as a starting material selected as the raw material preferably has an average degree of polymerization of 400 to 12,000 and a $\alpha$-cellulose content (%) of 60 to 100% by weight, and more preferably, 65 to 98% by weight.

An apparatuses used to proceed with "miniaturization" while suppressing as much as possible the shortening of the cellulose fibers is preferably a high-pressure homogenizer. Specific examples of high-pressure homogenizers include "EmulsiFlex" (manufactured by Avestin Inc.), "Ultimizer System" (manufactured by Sugino Machine, Co., Ltd.), "Nanomizer System" (manufactured by Nanomizer Co., Ltd.), "Microfluidizer" (manufactured by MFIC Corp.), and bubble type homogenizers (manufactured by Sanwa Kikai Co., Ltd., Invensys APV Co., Niro Soavi S.p.A., and Izumi Food Machinery Co., Ltd.). The high-pressure homogenizer treatment pressure is preferably 30 MPa or more, and more preferably, 60 to 414 MPa.

The polysaccharide used in the present invention is at least one selected from the group consisting of galactomannan, glucomannan, sodium alginate, tamarind seed gum, pectin, carrageenan, gellan gum, agar, sodium carboxymethyl cellulose, soybean water-soluble polysaccharide, karaya gum, psyllium seed gum, pullulan, gum arabic, tragacanth gum, gum ghatti, arabinogalactan and curdlan. Preferably, the polysaccharide is at least one selected from the group consisting of tamarind seed gum, pectin, carrageenan, sodium carboxymethyl cellulose, soybean water-soluble polysaccharide and karaya gum. The polysaccharide used in the present invention is preferably galactomannan, glucomannan, sodium alginate, tamarind seed gum, gellan gum, sodium carboxymethyl cellulose, soybean water-soluble polysaccharide, karaya gum or gum arabic, and more preferably galactomannan, glucomannan, pectin or sodium carboxymethyl cellulose. It is even more preferable if the carrageenan is lambda-carrageenan.

The galactomannan used in the present invention is a polysaccharide having a structure which is composed of a main chain consisting of $\beta$-1,4-bonded $\beta$-D-mannose and side chains consisting of $\alpha$-1,6-bonded $\alpha$-D-galactose. Examples of galactomannans include guar gum, locust bean gum, tara gum and the like, wherein the proportions of mannose to glucose are about 2:1 for guar gum, about 4:1 for locust bean gum, and about 3:1 for tara gum.

The pectin used in the present invention has been partially esterified by methanol and has a main chain consisting of $\alpha$-1,4-bonded $\alpha$-D-galacturonic acid. By introducing $\beta$-L-rhamnose on the galacturonic acid main chain, kinks are formed in the molecule. In some cases a neutral araban, galactan, xylan or the like are linked to the galacturonic acid main chain as side chains or mixed with the pectin. The galacturonic acid constituting the pectin exists in methyl ester form and in the two forms of the acid. The ratio of the galacturonic acid existing in the ester form is known as the degree of esterification. If the degree of esterification is 50% or higher, the pectin is referred to as HM pectin, and if the degree of esterification is less than 50%, the pectin is referred to as LM pectin.

The gellan gum used in the present invention has four sugars, which are glucose, glucuronic acid, glucose and L-rhamnose, linked in a straight chain as a recurring unit. Native gellan gum consists of 3 to 5% acetyl groups linked to the C-6 position of the glucose and glyceryl groups linked to the C-2 position. Deacetylated gellan gum is a gum wherein native gellan gum was subjected to a deacetylation treatment and then purified. The sodium carboxymethyl cellulose used in the present invention has had the hydroxyl groups of the cellulose esterified by monochloroacetatic acid or sodium monochloroacetate and has a $\beta$-1,4-bonded D-glucose straight chain structure.

The soybean water-soluble polysaccharide used in the present invention is composed of sugars such as galactose, arabinose, galacturonic acid, rhamnose, xylose and glucose. It is thought that galactan and arabinan are linked to the rhamnogalacturonic acid chain.

The molecular structure of the gum arabic used in the present invention is not clearly understood. However, the its structural sugars are reported to be D-galactose 36%, L-arabinose 31%, L-rhamnose 13%, and D-glucuronic acid 18%, and to also have 2% of protein.

In addition to these components, the stabilizer and thickening agent according to the present invention may also be appropriately blended with a starch, an oil or a fat, a protein, a peptide, an amino acid, a salt such as a dietary salt and various phosphoric acid salts, a surfactant, an emulsifier, a preservative, a pot-life improver, a souring agent, a sweetener, an incense, a colorant, a pH adjuster, a defoaming agent, a mineral, dietary fiber, a flavoring, an acid, an alkali, an alcohol and the like.

The highly dispersible cellulose complex used as a structural component of the stabilizer and thickening agent composition according to the present invention consists of 50 to 95% by weight of water-dispersible cellulose, 1 to 49% by weight of water-soluble polymer, and 1 to 49% by weight of hydrophilic substance. Preferably, the highly dispersible cellulose complex is a dry composition composed of water-dispersible cellulose:water-soluble polymer:hydrophilic substance in the range of 55 to 85:1 to 30:5 to 40% by weight, and more preferably, 60 to 75:5 to 20:15 to 25% by weight. This composition may be granular, particulate, powdery, scaly, crumbly or sheet-shaped. When this complex is charged into water and subjected to a mechanical shearing force, the Composition is characterized in that the particles disintegrate so that fine-fibrous cellulose disperses in the water. If the water-dispersible cellulose is less than 50% by weight, the ratio of cellulose is low, whereby the effects are not exhibited.

The water-soluble polymer which is a component of the highly dispersible cellulose complex used in the present invention is a substance that acts to prevent keratinization among the cellulose during drying. Specific examples of the compounds used include one or two or more substances selected from gum arabic, arabinogalactan, alginic acid and salts thereof, curdlan, gum ghatti, carrageenan, karaya gum, agar, xanthan gum, guar gum, enzymatically-hydrolyzed guar gum, quince seed gum, gellan gum, gelatin, tamarind seed gum, indigestible dextrin, tragacanth gum, furcellaran, pullulan, pectin, locust bean gum, water-soluble soybean polysaccharide, sodium carboxymethyl cellulose, methylcellulose and sodium polyacrylate. Among these substances, preferable are gum arabic, xanthan gum, sodium carboxymethyl cellulose, gellan gum and indigestible dextrin. More preferable is sodium carboxymethyl cellulose. As the sodium carboxymethyl cellulose, even more preferable is cellulose having a carboxymethyl group degree of substitution of 0.5 to 1.5, preferably 0.5 to 1.0, and more preferably, 0.6 to 0.8. In addition, when made into a 1% by weight aqueous solution, the viscosity should be about 5 to 9,000 mPa·s, preferably about 1,000 to 8,000 mPa·s, and more preferably, about 2,000 to 6,000 mPa·s.

The hydrophilic substance which is a component of the highly dispersible cellulose complex used in the present invention is a substance having a high solubility in cold water which is hardly viscous and is a solid at room temperature. Examples of the hydrophilic substance include one, or two or more, substances selected from dextrins, water-soluble sugars (glucose, fructose, sucrose, lactose, isomerized sugar, oligosaccharide, xylose, trehalose, coupling sugar, paratinose, sorbose, reduced starch-saccharified gluten, maltose, lactulose, fructo-oligosaccharide, galacto-oligosaccharide), and sugar alcohols (xylitol, maltitol, mannitol, sorbitol, etc.). Preferable are dextrins and trehalose, and more preferable are dextrins. As mentioned above, the water-soluble polymer acts to prevent the keratinization of cellulose. Nevertheless, some water-soluble polymers are inferior in water-conveying property into the complex interior. Accordingly, it is sometimes necessary to apply a stronger mechanical shearing force for a longer period of time. The hydrophilic substance mainly enhances the water-conveying property, and specifically, accelerates the water-disintegrating property of the dry composition.

The dextrins used in the present invention are partial hydrolyzates formed by hydrolyzing starch by an acid, an enzyme or heat, in which the glucose residues are combined through $\alpha$-1,4 linkages and $\alpha$-1,6 linkages. As expressed in terms of DE (dextrose equivalent), those having a DE value of about 2 to 42, and preferably, about 20 to 42, are used. Branched dextrin from which glucose and low molecular weight oligosaccharide have been removed can also be used. The trehalose used in the present invention is a disaccharide to which two D-glucose molecules are linked. These linkages are usually $\alpha$, $\alpha$ (1→1) linkages.

As mentioned above, when the highly dispersible cellulose complex of the present invention is charged into water and a mechanical shearing force is applied thereto, the constitutional units (such as the particles) are disintegrated and the fine-fibrous cellulose is dispersed in water. This "mechanical shearing force" refers to dispersing a 0.5% by weight aqueous dispersion with a rotational homogenizer at 15,000 rpm or less for 15 minutes at temperature of 80°C or lower.

The thus-obtained aqueous dispersion contains in a state prior to drying the "component stably suspensible in water" in an amount of 30% by weight or more based on the total cellulose component. This aqueous dispersion has a loss tangent smaller than 1, at a concentration of 0.5% by weight. The conditions for measuring the content of the "component stably suspensible in water" in the water-dispersible cellulose and the loss tangent will be described later. As described above, the water-dispersible cellulose has a major axis of 0.5 to 30 μm and a minor axis of 2 to 600 nm. The major axis/minor axis ratio is 20 to 400. Preferably, the width thereof is 100 nm or less, and more preferably 50 nm or less.

The weight ratio between the water-dispersible cellulose and the polysaccharide which constitute the stabilizer and thickening agent of the present invention is, as solid content, 1:9 to 8:2, preferably, 2:8 to 7:3, and more preferably, 4:6 to 6:4.

If the highly dispersible cellulose complex according to the present invention is stirred in a 0.01% by weight aqueous calcium chloride solution, the particles are easily disintegrated and dispersed, whereby a high viscosity is expressed. The extent of this is such that viscosity when stirred under practical conditions in a 0.01% by weight aqueous calcium chloride solution is 50% or more as compared with the viscosity exhibited when stirred by a strong force in pure water.

In a 0.01% aqueous calcium chloride solution, the value expressed as "hardness" of ordinary tap water is 90, which is the maximum level ion concentration of ordinary tap water in Japan. It is known that such an ion presence will have an effect on swelling and solubility of a water-soluble polymer, such as sodium carboxymethyl cellulose, whereby the ability to promote integrating and dispersion of the particles is dramatically decreased. As a result, when used in many food items, such as dressings and foods formulated with milk, it is necessary to either pre-disperse in pure water, or use a strong dispersing machine such as a high-pressure homogenizer. This is a problem.

The structural viscosity formation effect of the present invention is expressed as a structural viscosity index (TI value) calculated from the "viscosity at a rotation speed of 3 rpm ($\eta 3$)" and "viscosity at a rotation speed of 100 rpm ($\eta 100$)". Stability tends to depend on $\eta 3$, and thus structural viscosity index (TI value) is compared using aqueous dispersions (or liquid-state compositions) which have been adjusted so that their $\eta 3$ express about the same viscosity. The term "TI value" used here is represented by "TI = $\eta 3/\eta 100$", wherein the higher the TI value, the better liquid drainability is and the lower the sense of pasty feeling is. A structural viscosity formation effect is considered to exist when the following structural viscosity index is such that "TI$\alpha$ > TI$\beta$".

The structural viscosity index (TI$\alpha$) of the aqueous dispersion of the composition according to the present invention is determined from "TI$\alpha$ = $\eta 3\alpha/\eta 100\alpha$". $\eta 3\alpha$: Viscosity of an aqueous dispersion of the composition according to the present invention at 3 rpm.

$\eta 100\alpha$: Viscosity of an aqueous dispersion of the composition according to the present invention at 100 rpm.

The structural viscosity index (TI$\beta$) of the aqueous dispersion of the polysaccharide contained in the composition according to the present invention used in the adjustment of the viscosities $\eta 3\alpha$ and $\eta 100\alpha$ can be determined from "TI$\beta$ = $\eta 3\beta/\eta 100\beta$".

$\eta 3\beta$: Viscosity at 3 rpm of an aqueous dispersion of the polysaccharide contained in the composition according to the present invention used in the adjustment of the viscosity $\eta 3\alpha$.

(however, the added amount of polysaccharide is adjusted so that $\eta 3\beta \approx \eta 3\alpha$; i.e. "$0.9 \leq \eta 3\alpha / \eta 3\beta \leq 1.1$".)

$\eta 100\beta$: Viscosity at 100 rpm of an aqueous dispersion of the polysaccharide contained in the composition according to the present invention used in the adjustment of the viscosity $\eta 100\alpha$.

The term "liquid drainability" as used here refers to the draining behaviour when the aqueous dispersion is shifted from the vessel. Specifically, when a vessel is tilted and then returned to its original position, if liquid drainability is good, not much liquid adheres to the lip vicinity of the vessel. However, if liquid drainability is poor, a large amount of liquid adheres to the lip vicinity of the vessel, and if liquid drainability is even poorer, the liquid forms threads which do not break.

The term "sense of pasty feeling" used in the present invention refers to a sense of pasty feeling or sliminess felt when a person puts the liquid in their mouth. This is generally comparable to a viscosity having a shear rate of 10 to 50/s. It is said that the higher this viscosity is, the stronger the sense of pasty feeling is. If the rotation speed (rpm) for a B type viscometer is calculated as shear rate (/s), 100 rpm is comparable to about 20 to 70/s. Thus, the lower that $\eta 100$ is, and since in the present invention $\eta 3\beta \approx \eta 3\alpha$, the greater that the structural viscosity index (TI value) is, the sense of pasty feeling is not felt as much.

Examples of the food items according to the present invention include: luxury drinks, such as coffee, teas such as black tea, Japanese tea and oolong tea, green powdered tea, cocoa, sweet bean paste soup, juice, soyabean juice and the like; milk component-containing drinks, such as raw milk, processed milk, fermented milk drinks, lactic acid drinks and the like; fermented milk; red bean soup with pieces of rice cake; various drinks including nutrition-enriched drinks, such as calcium-fortified drinks and the like and dietary fiber-containing drinks and the like; dairy products, such as coffee whitener, whipping cream, custard cream, soft cream and the like; soups; stews; seasonings such as sauces, bastes (tare), dressings and the like; various paste condiments represented by kneaded mustard; fruit flesh processed items such as fruit sauces, fruit preparations, jams and the like; liquid foods such as tube-fed liquid food and the like; and liquid or paste health food products; liquid or paste pet food products. These food items are all encompassed within the present invention, regardless of any difference in their form or processing operation at the time of preparation, as seen in retort foods, frozen foods, microwave foods and the like. These food items are normally supplied at a pH of 3 to 8 and a dietary salt concentration of 0.001 to 20%. Therefore, these food items need to express the effects under such conditions.

The added amount of stabilizer and thickening agent according to the present invention is not especially limited, but is preferably 0.001 by weight or more and less than 1% by weight, and more preferably, 0.05 to 0.7% by weight, based on the food item.

The term "gelation" as used in the present invention refers to the capability a so-called "true gel" similar to a jelly or a pudding being formed when the aqueous dispersion is left to stand. The determination is made 24 hours after being left to stand. Further, the gelated aqueous dispersion does not have any fluid properties.

Next, the present invention will be described in more detail by referring to the Examples. The physical properties of the substances of the present invention were evaluated according to the following methods.

<Crystallinity of the Cellulosic Substance>

Crystallinity is defined according to the following formula as calculated by the Segal method from diffraction intensity values of the X-ray diffraction patterns measured using an X-ray diffraction as prescribed in JIS K 0131-1996 ("X-ray diffraction analysis general procedures").

$$\text{Crystallinity (\%)} = \{(Ic-Ia)/Ic\} \times 100$$

Here, Ic represents the diffraction intensity where the diffraction angle 2θ of the X-ray diffraction pattern is 22.5 degrees; and Ia represents the baseline intensity (minimum value) where the same diffraction angle 2θ is approximately 18.5 degrees

<Shape (Major Axis, Minor Axis, Major Axis/Minor Axis Ratio) of Cellulose Fiber (Particles)>

Since the sizes of cellulose fibers (particles) vary in a wide range, it is impossible to observe all of the fibers with only one kind of microscope. Accordingly, an optical microscope and a scanning microscope (medium resolution SEM and high resolution SEM) are appropriately selected according to the size of the fiber (particle) to carry out observation and measurement. When an optical microscope is used, a sample and water are weighed out so that the aqueous dispersion has a solid concentration of 0.25% by weight. This dispersion is dispersed using an "Excel Auto Homogenizer" (manufactured by Nippon Seiki, Co., Ltd.) at 15,000 rpm for 15 minutes, and the resultant dispersion is adjusted to an appropriate concentration and is then put on a slide glass, covered with a cover glass, and observed. When a medium resolution SEM (JSM-5510LV, manufactured by JEOL Ltd.) is used, an aqueous sample dispersion is put on a sample stand and air dried, after which about 3 nm of Pt-Pd is vapor-deposited thereon and the sample is then observed. When a high resolution SEM (S-5000, manufactured by Hitachi Science Systems, Co., Ltd.) is used, a sample aqueous dispersion is put on a sample stand and air-dried, after which about 1.5 nm of Pt-Pd is vapor-deposited thereon and the sample is then observed.

The major axis, minor axis and major axis/minor axis ratio of the cellulose fibers (particles) were measured for 15 or more fibers from photographs. The fibers ranged from nearly straight ones to curved ones (like a hair), but none of the fibers was in curled form like waste yarn. The minor axis (thickness) varied even within a single fiber, and thus the average value was taken. The high resolution SEM was used for observation of fibers having a minor axis of about several nm to 200 nm, but one fiber was too long and could not be observed in a single visual field. Thus, photographing was repeated while moving the visual field, after which the photographs were combined and analyzed.

<Content of "Component Stably Suspensible in Water">

The content was determined from the following (1) to (5) and (3') to (5').

(1) A sample and pure water were weighed out so as to give an aqueous dispersion with a cellulose concentration of 0.1% by weight, and dispersed with an Ace Homogenizer (Model AM-T, manufactured by Nippon Seiki, Co., Ltd.) at 15,000 rpm for 15 minutes.
(2) 20 g of the sample solution was introduced into a centrifugal tube and centrifuged with a centrifugal machine at 1,000 G for 5 minutes.
(3) The upper liquid layer was removed, and the weight of the sedimented component (a) was measured.
(4) Then, the sedimented component was completely dried, and the weight of the solid component (b) was measured.
(5) According to the following formula, the content of the "component stably suspensible in water" (c) was calculated:

$$c = 5{,}000 \times (k1+k2) \ [\% \text{ by weight}]$$

k1 and k2 were calculated according to the following formulae. (Here, "k1" represents the amount of "fine-fibrous cellulose" in the upper layer of the liquid; "k2" represents the amount of "fine-fibrous cellulose" in the sedimented component; "w1" represents the amount of water in the upper layer of the liquid; "w2" represents the amount of water in the sedimented component; and "s2" represents the amount of "water-soluble polymer + hydrophilic substance" in the sedimented component.)

$$k1 = 0.02 - b + s2$$

$$k2 = k1 \times w2/w1$$

$$\text{(water-soluble polymer + hydrophilic substance)/cellulose}$$

$$= d/f \text{ (compounding ratio)}$$

$$w1 = 19.98 - a + b - 0.02 \times d/f$$

$$w2 = a - b$$

$$s2 = 0.02 \times d \times w2/\{f \times (w1+w2)\}$$

When the content of the "component stably dispersible in water" was very large, the weight of the sedimented component was small, and therefore the accuracy of measurement according to the above-described method decreased. In such cases, therefore, the following procedures were carried out after (3). (3') The upper liquid layer was taken out and the weight (a') was measured.
(4') Then, the upper layer component was completely dried and the weight of the solid component (b') was measured.
(5') According to the following formula, the content of the "component stably dispersible in water" (c) was calculated:

$$c = 5,000 \times (k1+k2) \text{ [\% by weight]}$$

k1 and k2 were calculated according to the following formulae. (Here, "k1" represents the amount of "fine-fibrous cellulose" in the upper layer of the liquid; "k2" represents the amount of "fine-fibrous cellulose" in the sedimented component; "w1" represents the amount of water in the upper layer of the liquid; "w2" represents the amount of water in the sedimented component; and "s2" represents the amount of "water-soluble polymer + hydrophilic substance" in the sedimented component.)

$$k1 = b' - s2 \times w1/w2$$

$$k2 = k1 \times w2/w1$$

$$(\text{water-soluble polymer + hydrophilic}$$

$$\text{substance})/\text{cellulose}$$

$$= d/f \text{ (compounding ratio)}$$

$$w1 = a' - b'$$

$$w2 = 19.98 - a' + b' - 0.02 \times d/f$$

$$s2 = 0.02 \times d \times w2/\{f \times (w1+w2)\}$$

If in the operation of (3) the boundary between the upper layer of the liquid and the sedimented component was not clear and separation was difficult, the operation was carried out at an appropriately lowered concentration of cellulose.

<Loss Tangent> (=Loss Elastic Modulus/Storage Elastic Modulus)

The loss tangent was determined according to the following procedure.

(1) A sample and pure water were weighed out so as to give an aqueous dispersion having a solid concentration of 0.5% by weight, and dispersed with an Excel Auto Homogenizer (manufactured by Nippon Seiki, Co., Ltd.) at 15,000 rpm for 15 minutes.
(2) The dispersion was left standing in an atmosphere of 25°C for 3 hours.
(3) The sample solution was introduced into a dynamic viscoelasticity measuring apparatus and left to stand for 5 minutes, and then measured under the following conditions. From the results, a loss tangent (tan δ) at a frequency of 10 rad/s was determined.
Apparatus: ARES (Model 100 FRTN1) (manufactured by Rheometric Scientific Inc.)
Geometry: Double Wall Couette
Temperature: 25°C
Strain: 10% (fixed)
Frequency: 1 to 100 rad/s (elevated over a period of about 170 seconds)

<Dispersibility of 0.01% Calcium Chloride Aqueous Solution>

(1) A sample and pure water were weighed out so as to give an aqueous dispersion having a solid concentration of 1% by weight, and dispersed with an Ace Homogenizer™ (manufactured by Nippon Seiki, Co., Ltd., model AM-T) at 15,000 rpm for 15 minutes (25°C).
(2) The dispersion was left to stand at 25°C for 3 hours.
(3) After thoroughly stirring, a rotational viscometer (B type viscometer, manufactured by Tokimec, Inc.) was set up. Thirty seconds after completing the stirring, rotation of the rotor was started. Thirty seconds thereafter, the indication of the viscometer was read, from which viscosity (Va) was calculated. The rotor rotation speed and type were altered appropriately, depending on the viscosity.
(4) Next, a sample, calcium chloride and pure water were weighed out so as to give an aqueous dispersion having a solid concentration of 1% by weight and a calcium chloride concentration of 0.01% by weight, and dispersed with a T.K. HOMO MIXER™ (manufactured by Primix Corporation, Mark II Model 2.5) at 8,000 rpm for 10 minutes (25°C).
(5) The dispersion was left to stand at 25°C for 3 hours.

(6) After thoroughly stirring, a rotational viscometer (B type viscometer, manufactured by Tokimec, Inc.) was set up. Thirty seconds after completing the stirring, rotation of the rotor was started. Thirty seconds thereafter, the indication of the viscometer was read, from which viscosity (Vb) was calculated. The rotor rotation speed was set at 60 rpm, and the rotor type was altered appropriately, depending on the viscosity.

(7) The "dispersibility of 0.01% calcium chloride aqueous solution" was calculated using the following formula. dispersibility of a 0.01% calcium chloride aqueous

$$\texttt{solution [\%] = (Vb/Va)} \times \texttt{100}$$

<Preparation of Aqueous Dispersion and Confirmation of Gelation State and Liquid Drainability>

First, a sample and water were weighed out so that the aqueous dispersion had a solid content of 1% by weight. This solution was then dispersed with a "T.K. HOMO MIXER (manufactured by Primix Corporation) at 8,000 rpm for 10 minutes. This 1% by weight aqueous sample dispersion solution was then mixed with water in a 4:6 ratio, and the resultant solution was further dispersed for 5 minutes. While the temperature at this state is not especially limited, a temperature suitable for dispersing the sample was selected. Further, additives (calcium, sodium etc.) essential for the expression of functions may be added in accordance with the nature of the polysaccharide used. In the present example, calcium chloride was added when using pectin. Next, this aqueous sample dispersion was filled into three beakers. After leaving the aqueous sample dispersion filled into one of the beakers for 24 hours in a 25°C atmosphere, if the aqueous sample dispersion flowed and spilled out when the beaker was tilted, it was determined that fluid properties were maintained and that a gel had not formed. This operation was not carried out for samples whose gelation state did not need to be confirmed.

The 0.4% by weight aqueous sample dispersion filled into another of the beakers was left to stand for 3 hours in a 25°C atmosphere. In this standing state, a rotational viscometer (B type viscometer, manufactured by Toki Sangyo Co. Ltd., "TV-10") was set up, and the viscosity was read out after 60 seconds. The rotor rotation speed was set at 3 rpm, and the rotor and adapter were appropriately altered in accordance with the viscosity. A stabilizer and thickening agent were selected having an arbitrary ratio of highly dispersible cellulose complex to polysaccharide, and the viscosity Z1 thereof was measured as a 0.4% by weight aqueous dispersion in the same manner.

This 1% by weight aqueous sample dispersion solution was then mixed with water in an arbitrary ratio so that the below-described "viscosity of the aqueous thickening stabilizer dispersion at a rotation speed of 3 rpm" was 2,500 to 3,000 mPa·s. The resultant solution was further dispersed for 5 minutes to thereby prepare an aqueous sample dispersion.

The term "thickening synergistic effects" in the present invention refers to the synergistic effects specifically manifested as a result of comprising a highly dispersible cellulose complex and at least one kind of polysaccharide. Specifically, a thickening synergistic effect is considered as being present when the viscosity of the following aqueous thickening agent dispersion (viscosity Z), in which a thickening agent listed in item 3 of paragraph 0011 was used, is greater than the theoretical viscosity $\alpha$; or in other words, where the relationship "viscosity Z > theoretical viscosity $\alpha$" is satisfied.

Here,

Viscosity X: Viscosity of the aqueous dispersion when the same amount of polysaccharide contained in the thickening agent used in the preparation of viscosity Z was added as the thickening agent of viscosity Z. Viscosity Y: Viscosity of the aqueous dispersion when the same amount of highly dispersible cellulose complex contained in the thickening agent used in the preparation of viscosity Z was added as the thickening agent of viscosity Z.

Viscosity Z: Viscosity of the aqueous dispersion of the thickening agent listed in item 3 of paragraph 0011.

$\alpha$: Viscosity theoretical value estimated from viscosity X and viscosity Y from the following formula.

$$\texttt{Viscosity } \alpha = [\beta \times \texttt{viscosity X} + \gamma \times \texttt{viscosity}$$
$$\texttt{Y]/}(\beta+\gamma)$$

$\beta$: Amount of polysaccharide (% by weight) contained in the aqueous thickening agent dispersion used when determining viscosity Z.

$\gamma$: Amount of highly dispersible cellulose complex (% by weight) contained in the aqueous thickening agent dispersion used when determining viscosity Z.

$\beta+\gamma$: Amount of thickening agent (% by weight) contained in the aqueous thickening agent dispersion used when determining viscosity Z.

<Calculation of Structural Viscosity Index (TI value) and Determination of Formation Effect>

The structural viscosity index (TI = $\eta3/\eta100$) of an aqueous sample dispersion aqueous composition dispersion, prepared by mixing the above-obtained 1% by weight aqueous sample dispersion solution with water in an arbitrary ratio so that the "viscosity of the aqueous thickening stabilizer dispersion at a rotation speed of 3 rpm" was 2,500 to 3,000 mPa·s, and then dispersing the resultant solution for a further 5 minutes, was calculated from the "viscosity at a rotation speed of 3 rpm ($\eta3$)" and "viscosity at a rotation speed of 100 rpm ($\eta100$)".

The structural viscosity index (TI$\alpha$) of the aqueous composition dispersion of the present invention is determined from "TI$\alpha$ = $\eta3\alpha/\eta100\alpha$".

$\eta3\alpha$: Viscosity of an aqueous dispersion of the composition according to the present invention at 3 rpm.

$\eta100\alpha$: Viscosity of an aqueous dispersion of the composition according to the present invention at 100 rpm.

The structural viscosity index (TI$\beta$) of the aqueous dispersion of the polysaccharide contained in the composition according to the present invention used in the adjustment of the viscosities $\eta3\alpha$ and $\eta100\alpha$ can be determined from "TI$\beta$ = $\eta3\beta/\eta100\beta$".

$\eta3\beta$: Viscosity at 3 rpm of an aqueous dispersion of the polysaccharide contained in the composition according to the present invention used in the adjustment of the viscosity $\eta3\alpha$.

(however, the added amount of polysaccharide is adjusted so that $\eta3\beta \approx \eta3\alpha$; i.e. "$0.9 \leq \eta3\alpha / \eta3\beta \leq 1.1$".)

$\eta100\beta$: Viscosity at 100 rpm of an aqueous dispersion of the polysaccharide contained in the composition according to the present invention used in the adjustment of the viscosity $\eta100\alpha$.

When the above-determined structural viscosity indices TI$\alpha$ and TI$\beta$ satisfy the relationship "TI$\alpha$ > TI$\beta$", the aqueous composition dispersion is considered to have a structural viscosity formation effect.

<Confirmation of Gelation State and Liquid Drainability, and Viscosity Measurement of Food Items (Fruit Sauce, Fermented Milk Drink and Corn Soup)>

Liquid-state compositions prepared in accordance with the below-described examples were each filled into three beakers. After leaving one of the food items filled into a beaker for 24 hours, if the aqueous sample dispersion flowed and spilled out when the beaker was tilted, it was determined that fluid properties were maintained and that a gel had not formed. This operation was not carried out for samples whose gelation state did not need to be confirmed. When the beaker was tilted and then returned to its original position, if the liquid-state composition tightly adhered to the lip of the beaker, or formed some threads, liquid drainability was determined to be poor, and if the liquid-state composition drained out without adhering, liquid drainability was determined to be good.

Two food items filled into the beakers were left to stand for 3 hours in a 25°C atmosphere. In this standing state, a rotational viscometer (B type viscometer, manufactured by Toki Sangyo Co. Ltd., "TV-10") was set up, and the viscosity was read out after 60 seconds. The viscosity of the liquid-state composition filled into one of the beakers was measured at a rotor rotation speed of 3 rpm, and the viscosity of the liquid-state composition filled into the other beaker was measured at a rotor rotation speed of 100 rpm. The rotor and adapter were appropriately altered in accordance with the viscosity.

<Determination of Sense of Pasty Feeling of Food Items (Fruit Sauce, Fermented Milk Drink and Corn Soup)>

A sensory test was conducted by making twenty people eat 1 g of the remaining food items used in the above-described measurement of "viscosity ($\eta3$) at a rotation speed of 3 rpm", to thereby determine "percentage (%) of those who felt a sense of pasty feeling = number of people who felt a sense of pasty feeling/$20\times100$". The sensory tests of the following examples were all carried out using the same twenty people.

<pH>

pH was measured a pH meter ("HM-50G", manufactured by DKK-Toa Corporation)

Grain immobilization effect of the 0.35% by weight aqueous dispersion refers to the effect in immobilizing any of the grains described in the following (1) to (4), and is expressed based on the grain immobilization index (%).

(1) Spherical grains a: Grains made from polypropylene (major axis of 2.4 mm, minor axis of 2.4 mm, average grain size of 2.4 mm, and specific gravity of 0.9).
(2) Spherical grains b: Grains made from polyacetal resin (major axis of 2.4 mm, minor axis of 2.4 mm, average grain size of 2.4 mm, and specific gravity of 1.4).

(3) Plate-like grains c: Grains made from paper (rectangular, major axis of 5 mm, minor axis of 3 mm, thickness of 0.3 mm, and specific gravity of 0.9).

(4) Plate-like grains d: Grains made from polyethylene terephthalate (rectangular, major axis of 5 mm, minor axis of 3 mm, thickness of 0.3 mm, and specific gravity of 1.4).

A 0.35% by weight aqueous stabilizer dispersion and the same amount by weight of an aqueous polysaccharide dispersion were filled into 100 mL sample bottles. Next, grains from any of (1) to (4) were selected, and 20 grains thereof were added to both the 0.35% by weight aqueous stabilizer dispersion and a 0.35% by weight aqueous polysaccharide dispersion. The resultant mixtures were temperature-adjusted for 1 hour at 25°C, after which the mixtures were mixed by vigorously shaking the sample bottles up and down. The mixtures were left to stand for 3 hours at 25°C, and then the number of grains floating on the liquid surface or the number that had sedimented to the bottom were visually counted. The numbers were plugged into the following grain immobilization index (%) formula to determine the grain immobilization index (%).

<Grain Number Measurement for Fruit Sauce, Fermented Milk Drink and Corn Soup>

In accordance with the following method, these liquid-state compositions were prepared and sprinkled with 20 grains per filled vessel. After a predetermined length of time had elapsed, the number of grains floating on the liquid surface or the number that had sedimented to the bottom were visually counted. The numbers were plugged into the following grain immobilization index (%) formula to determine the grain immobilization index (%). In cases where the added grains are small, 50 grains instead of 20 grains may be added.

<Grain Immobilization Index and Grain Immobilization Effects>

The grain immobilization index (%) is calculated using the following formula.

$$\text{Grain immobilization index (\%)} = [\{\delta - (\varepsilon + \theta)\}/\delta] \times 100$$

$\delta$:    Total number of grains
$\varepsilon$:    Number of grains floating on the liquid surface
$\theta$:    Number of grains sedimented on the bottom

When the grain immobilization index of the aqueous dispersion which used the stabilizer according to the present invention is greater than the grain immobilization index of the aqueous dispersion prepared to the same concentration but which used only a polysaccharide, a grain immobilization effect is considered as being present. Specifically, a grain immobilization effect is considered as being present when the following grain immobilization indices S and U satisfy the relationship "grain immobilization index S > grain immobilization index U".

Grain immobilization index S: Grain immobilization index when the stabilizer according to the present invention is used for the aqueous dispersion.

Grain immobilization index U: Grain immobilization index when the polysaccharide contained in the stabilizer used when determining the grain immobilization index X is used for the aqueous dispersion.

<Grain Dimension Measurement>

Grain dimension measurement was conducted by observing a grain with a microscope, or by measuring with a micrometer, to determine the major axis and the minor axis. The number of repetitions in this step was 30.

<Average Grain Size of the Spherical grains>

The average grain size was calculated according to "(major axis + minor axis)/2" from the major axis and minor axis. The number of repetitions in this step was 30.

<Grain Specific Gravity>

Specific gravity was calculated according to JIS Z 8807-1976 (Measuring methods for specific gravity solid).

The present invention will now be described in more detail by illustrating with the following examples and comparative examples. However, the present invention is not intended to be limited to these examples and comparative examples. The water-dispersible cellulose, highly dispersible cellulose complex, guar gum, pectin and glucomannan used in the examples and comparative examples are illustrated in the following (1) to (5).

(1) Adjustment of Highly Dispersible Cellulose Complex A

Commercially available wheat straw pulp (average degree of polymerization of 930, $\alpha$-cellulose content of 68% by weight) was cut into rectangles having sides of 6 $\times$ 12 mm. Water was added thereto so as to give a concentration of 4% by weight. The mixture was stirred with a domestic mixer for 5 minutes. The mixture was then dispersed with a highspeed rotational homogenizer (Ultra-Disperser, manufactured by Yamato Kagaku) for one hour. The resultant aqueous dispersion was treated with a whetstone-rotation type grinder (grinder rotation speed: 1,800 rpm). This treatment was carried out twice, wherein the grinder clearance was first 60 $\mu$m, which was then changed to 40 $\mu$m. The resultant aqueous dispersion was then diluted with water so that the concentration was 2% by weight. This solution was subjected to eight passes with a high-pressure homogenizer (treatment pressure of 175 MPa), to thereby obtain a water-dispersible cellulose A slurry. This slurry had a crystallinity of 74%. When observed with an optical microscope, a fine-fibrous cellulose was observed having a major axis of 10 to 700 $\mu$m, a minor axis of 1 to 30 $\mu$m, and a major axis/ minor axis ratio of 10 to 150. The loss tangent was 0.43. The content of the "component stably suspensible in water" was 89% by weight. When this component was observed using a high-resolution SEM, an extremely fine-fibrous cellulose was observed having a major axis of 1 to 20 $\mu$m, a minor axis of 6 to 300 nm, and a major axis/minor axis ratio of 30 to 350. Dispersibility in 0.01% aqueous potassium chloride was 85%.

The water-dispersible cellulose A slurry was charged with sodium carboxymethyl cellulose (1% by weight aqueous solution, viscosity of about 3,400 mPa·s) and dextrin (DE of about 28) so that the concentration of water-dispersible cellulose A slurry:carboxymethylcellulose:dextrin:soybean oil was 63:15:21.5:0.5 (parts by weight). 15 kg of this solution was then mixed by stirring with a stirring homogenizer ("T.K. AUTO HOMO MIXER", manufactured by Primix Corporation) at 8,000 rpm for 10 minutes. The resultant solution was then subjected to a one-pass treatment with the above-described high-pressure homogenizer at 20 MPa, to thereby obtain a water-dispersible cellulose A' slurry.

The water-dispersible cellulose A' slurry was then dried using a drum drier and scraped out with a scraper. The resultant product was pulverized by a cutter mill (manufactured by Fuji Poudal, Co., Ltd.) to such an extent that the pulverized material could almost completely pass through a sieve having a mesh size of 2 mm, and was then further pulverized by an impact pulverizer so that the pulverized material could pass through a standard sieve having a mesh size of 425 $\mu$m, to thereby obtain a highly dispersible cellulose complex C. The highly dispersible cellulose complex A had a crystallinity of 58% or more, and a loss tangent of 0.68. The content of the "component stably suspensible in water" was 89% by weight. When the "component stably suspensible in water" was observed using a high-resolution SEM, an extremely fine-fibrous cellulose was observed having a major axis of 1 to 12 $\mu$m, a minor axis of 6 to 250 nm, and a major axis/minor axis ratio of 20 to 200.

(2) Adjustment of Highly Dispersible Cellulose Complex B

Commercially available bagasse straw pulp (average degree of polymerization of 1,320 $\alpha$-cellulose content of 77% by weight) was cut into rectangles having sides of 6 $\times$ 16 mm. Water was added thereto so as to give a solid content of 77% by weight. Taking care that the water and bagasse pulp did not separate, the solution was passed once through a cutter mill (gap between the cutting head and horizontal blade of 2.03 mm, impeller rotation speed of 3,600 rpm). The cutter mill treated product, sodium carboxymethyl cellulose (1% by weight aqueous solution, viscosity of about 3,400 mPa·s) and water were weighed out so that the concentration of cellulose came to 2% by weight and the concentration of sodium carboxymethyl cellulose came to 0.118% by weight, and the resultant mixture was stirred until there was no entanglement between fibers. The obtained aqueous dispersion was subjected as is to nine passes with a high-pressure homogenizer (treatment pressure of 90 MPa), to thereby obtain a water-dispersible cellulose B slurry. When observed with an optical microscope and a medium-resolution SEM, a fine-fibrous cellulose was observed having a major axis of 10 to 500 $\mu$m, a minor axis of 1 to 25 $\mu$m, and a major axis/minor axis ratio of 5 to 190. The loss tangent was 0.32. The content of the "component stably suspensible in water" was 99% by weight. When the "component stably suspensible in water" was observed using a high-resolution SEM, an extremely fine-fibrous cellulose was observed having a major axis of 1 to 20 $\mu$m, a minor axis of 10 to 400 nm, and a major axis/minor axis ratio of 20 to 300. The water-dispersible cellulose B slurry was charged with sodium carboxymethyl cellulose (1% by weight aqueous solution, viscosity of about 3,400 mPa·s) and dextrin (DE of about 28) so that the concentration of water-dispersible cellulose B slurry:carboxymethylcellulose:dextrin:soybean oil was 63:15:21.5:0.5 (parts by weight). 15 kg of this solution was then mixed by stirring with a stirring homogenizer ("T.K. AUTO HOMO MIXER", manufactured by Primix Corporation) at 8,000 rpm for 10 minutes. The resultant solution was then subjected to a one-pass treatment with the above-described high-pressure homogenizer at 20 MPa, to thereby obtain a water-dispersible cellulose B' slurry.

The water-dispersible cellulose B' slurry was then dried using a drum drier and scraped out with a scraper. The resultant product was pulverized by a cutter mill (manufactured by Fuji Poudal, Co., Ltd.) to such an extent that the pulverized material could almost completely pass through a sieve having a mesh size of 2 mm, and was then further pulverized by an impact pulverizer so that the pulverized material could pass through a standard sieve having a mesh size of 425 μm, to thereby obtain a highly dispersible cellulose complex C. The highly dispersible cellulose complex B had a crystallinity of 58% or more, and a loss tangent of 0.58. The content of the "component stably suspensible in water" was 99% by weight. When the "component stably suspensible in water" was observed using a high-resolution SEM, an extremely fine-fibrous cellulose was observed having a major axis of 1 to 12 μm, a minor axis of 10 to 330 nm, and a major axis/minor axis ratio of 20 to 220. Dispersibility in 0.01% aqueous potassium chloride was 66%. (3) Guar gum (manufactured by Unitec Foods Co., Ltd.) (4) Pectin (LM pectin, manufactured by CP Kelco) (5) Glucomannan (manufactured by Shimizu Chemical Corporation)

(Example 1)

A composition containing the highly dispersible cellulose complex A and guar gum in a 6:4 ratio was selected. First, the above-described sample and water were weighed out so that the aqueous solution had a solid content of 1% by weight. This solution was dispersed using the "T.K. AUTO HOMO MIXER" (manufactured by Primix Corporation) at 25°C and 8,000 rpm for 10 minutes. This 1% by weight aqueous sample dispersion and water were mixed in a ratio of 4:6, and the resultant solution was dispersed for another 5 minutes to prepare a 0.4% by weight aqueous sample dispersion. The thus-prepared dispersion was filled into three beakers. The 0.4% by weight aqueous sample dispersion filled into one of the beakers was left to stand for 24 hours in a 25°C atmosphere. When tilted, the aqueous sample dispersion flowed and spilled out. This aqueous sample dispersion had not turned into a gel, and had good liquid drainability. The 0.4% by weight aqueous sample dispersions filled into the remaining two beakers were left to stand for 3 hours in a 25°C atmosphere. In this standing state, a rotational viscometer (B type viscometer, manufactured by Toki Sangyo Co. Ltd., "TV-10") was set up, and the viscosity was read out after 60 seconds. At this point, the rotor and adapter were appropriately altered in accordance with the viscosity. The viscosity ($\eta3\alpha1$) of the 0.4% by weight aqueous sample dispersion filled into one of the beakers was measured at a rotor rotation speed of 3 rpm to be 2,600 mPa·s. The viscosity ($\eta100\alpha1$) of the 0.4% by weight aqueous sample dispersion filled into the other beaker was measured at a rotor rotation speed of 100 rpm to be 201 mPa·s. The structural viscosity index ($TI\alpha1$) of the 0.4% by weight aqueous sample dispersion at this point was: $TI\alpha1 = (\eta3\alpha1)/(\eta100\alpha1) = 13$.
Measurement of the theoretical viscosity $\alpha$ from the viscosity X1 of the 0.4% by weight aqueous guar gum dispersion (312 mPa·s) and the viscosity Y1 of the 0.4% by weight aqueous highly dispersible cellulose complex A dispersion (1,780 mPa·s) as measured by the above-described method gave a theoretical viscosity $\alpha1$ of 1,193 mPa·s. The relationship between the viscosity Z1 of the 0.4% by weight aqueous composition dispersion (2,600 mPa·s) and the theoretical viscosity $\alpha1$ (1,193 mPa·s) was "viscosity Z1 > theoretical viscosity $\alpha1$", whereby it was determined that this thickening agent had a thickening synergistic effect.
In the same manner, the viscosity ($\eta3\gamma1$) of a 0.62% by weight aqueous guar gum dispersion at a rotor rotation speed of 3 rpm was measured to be 2,550 mPa·s, and $\eta3\alpha1/\eta3\gamma1$ was 1.0. In addition, the viscosity ($\eta100\gamma1$) of a 0.62% by weight aqueous guar gum dispersion at a rotor rotation speed of 100 rpm was measured to be 593 mPa·s. The structural viscosity index ($TI\gamma1$) of the 0.62% by weight aqueous guar gum solution at this point was: $TI\beta1 = (\eta3\gamma1)/(\eta100\gamma1) = 4$.
Accordingly, the relationship between the structural viscosity index ($TI\alpha1$) and the structural viscosity index ($TI\beta1$) was "structural viscosity index ($TI\alpha1$) > structural viscosity index ($TI\beta1$)", whereby it was determined that this thickening stabilizer had an effect on structural viscosity formation.
The above-described 1% by weight aqueous sample dispersion and water were mixed in a ratio of 3.5:6.5, and the resultant solution was dispersed for another 5 minutes to prepare a 0.35% by weight aqueous stabilizer solution, which was then filled into four 100 mL sample bottles. One of the bottles filled with the 0.35% by weight aqueous sample dispersion was charged with 20 grains of "spherical grains a". The resultant mixture was temperature-adjusted for 1 hour at 25°C, after which the mixture was mixed by vigorously shaking the sample bottle up and down. The mixture was left to stand for 3 hours at 25°C, and then the number of grains floating on the liquid surface or that had sedimented to the bottom were visually counted to determine the grain immobilization index (%). The grain immobilization index when the "spherical grains a" were added is referred to as "S(a1)" Similarly, instead of spherical grains a, the grain immobilization index when "spherical grains b" were added is referred to as "S(b1)". Similarly, instead of spherical grains a, the grain immobilization index when "plate-like grains c" were added is referred to as "S(c1)". Similarly, instead of spherical grains a, the grain immobilization index when "plate-like grains d" were added is referred to as "S(d1)". These results are shown in Table 1.

[Table 1]

Table 1

| Grain immobilization index | Grain immobilization index S (%) | | Grain immobilization effect in Example 1 |
|---|---|---|---|
| Described location | Example 1 | | |
| Stabilizer | Stabilizer containing highly dispersible cellulose complex A and guar gum in a weight ratio of 6:4 | | |
| Results | S(a1) | 85 | Yes |
| | S(b1) | 75 | Yes |
| | S (c1) | 90 | Yes |
| | S(d1) | 85 | Yes |

(Example 2)

A composition containing the highly dispersible cellulose complex B and guar gum in a weight ratio of 8:2 was selected. 1.0% by weight and 0.4% by weight aqueous composition dispersions were prepared in the same manner as in Example 1, and evaluated. The 0.4% by weight aqueous thickening agent dispersion maintained its fluid properties and had not turned into a gel. Measurement of the theoretical viscosity from the viscosity X2 of the 0.4% by weight aqueous guar gum dispersion (312 mPa·s) and the viscosity Y2 of the 0.4% by weight aqueous highly dispersible cellulose complex B dispersion (2,010 mPa·s) gave a theoretical viscosity $\alpha 2$ of 1,670 mPa·s. In addition, the relationship between the viscosity Z2 of the 0.4% by weight aqueous thickening agent dispersion (2,700 mPa·s) and the theoretical viscosity $\alpha 3$ (1,670 mPa·s) was "viscosity Z2 > theoretical viscosity $\alpha 2$", whereby it was determined that this aqueous composition dispersion had a thickening synergistic effect.
The viscosity ($\eta 3\alpha 2$) of the 0.4% by weight aqueous composition dispersion at a rotation speed of 3 rpm was measured to be 2,690 mPa·s, and the viscosity ($\eta 100\alpha 2$) at a rotation speed of 100 rpm was measured to be 259 mPa·s. The structural viscosity index (TI$\alpha 2$) of the 0.4% by weight aqueous composition dispersion at this point was: TI$\alpha 2$ = ($\eta 3\alpha 2$)/($\eta 100\alpha 2$) = 10.
The structural viscosity index (TI$\beta 2$) of a 0.62% by weight aqueous guar gum solution obtained in the same manner as Example 1 was: TI$\beta 2$ = ($\eta 8\beta 2$) / ($\eta 100\beta 2$) = 4. Accordingly, the structural viscosity index (TI$\alpha 2$) was greater than the structural viscosity index (TI$\beta 2$), whereby it was determined that this aqueous composition dispersion had an effect on structural viscosity formation.
A 0.35% by weight aqueous composition solution was prepared in the same manner as in Example 1 by mixing the above-described 1.0% by weight aqueous sample dispersion and water in a ratio of 3.5:6.5, and then dispersing the resultant solution for another 5 minutes. The grain immobilization index when 20 grains of " spherical grains a" were added to this solution is referred to as "S(a2)". Similarly, instead of spherical grains a, the grain immobilization index when "spherical grains b" were added is referred to as "S(b2)". Similarly, instead of spherical grains a, the grain immobilization index when "plate-like grains c" were added is referred to as "S(c2)". Similarly, instead of spherical grains a, the grain immobilization index when "plate-like grains d" were added is referred to as "S(d2)". These results are shown in Table 2.

[Table 2]

Table 2

| Grain immobilization index | Grain immobilization index S (%) | | Grain immobilization effect in Example 2 |
|---|---|---|---|
| Described location | Example 2 | | |
| Stabilizer | Stabilizer containing highly dispersible cellulose complex B and guar gum in a weight ratio of 8:2 | | |
| Results | S(a2) | 90 | Yes |
| | S(b2) | 80 | Yes |
| | S(c2) | 95 | Yes |
| | S(d2) | 85 | Yes |

(Example 3)

A composition containing the highly dispersible cellulose complex B and guar gum in a weight ratio of 6:4 was selected. A 0.4% by weight aqueous composition dispersion was prepared in the same manner as in Example 1, and evaluated. This 0.4% by weight aqueous composition dispersion maintained its fluid properties and had not turned into a gel.

Measurement of the theoretical viscosity from the viscosity X3 of the 0.4% by weight aqueous guar gum dispersion (312 mPa·s) and the viscosity Y3 of the 0.4% by weight aqueous highly dispersible cellulose complex B dispersion (2,010 mPa·s) gave a theoretical viscosity $\alpha 3$ of 1,331 mPa·s. In addition, the relationship between the viscosity Z3 of the 0.4% by weight aqueous thickening agent dispersion (3,350 mPa·s) and the theoretical viscosity $\alpha 4$ (1,331 mPa·s) was "viscosity Z3 > theoretical viscosity $\alpha 3$", whereby it was determined that this aqueous composition dispersion had a thickening synergistic effect.

When a 0.33% by weight aqueous thickening stabilizer dispersion was prepared in the same manner as in Example 1, the dispersion maintained its fluid properties, had not turned into a gel, and had good liquid drainability. Further, the viscosity ($\eta 3\alpha 3$) at a rotation speed of 3 rpm was 2,710 mPa·s, and the viscosity ($\eta 100\alpha 3$) at a rotation speed of 100 rpm was 204 mPa·s. The structural viscosity index (TI$\alpha 3$) of this 0.33% by weight aqueous thickening stabilizer dispersion was: TI$\alpha 3$ = ($\eta 3\alpha 3$)/($\eta 100\alpha 3$) = 13. The structural viscosity index (TI$\beta 3$) of a 0.62% by weight aqueous guar gum solution obtained in the same manner as Example 1 was: TI$\beta 3$ = ($\eta 3\beta 3$)/($\eta 100\beta 3$) = 4. Accordingly, the structural viscosity index (TI$\alpha 3$) was greater than the structural viscosity index (TI$\beta 3$), whereby it was determined that this aqueous composition dispersion had an effect on structural viscosity formation.

A 0.35% by weight aqueous composition solution was prepared in the same manner as in Example 1 by mixing the above-described 1.0% by weight aqueous composition dispersion and water in a ratio of 3.5:6.5, and then dispersing the resultant solution for another 5 minutes. The grain immobilization index when 20 grains of "spherical grains a" were added to this solution is referred to as "S(a3)". Similarly, instead of spherical grains a, the grain immobilization index when "spherical grains b" were added is referred to as ''S(b3)". Similarly, instead of spherical grains a, the grain immobilization index when "plate-like grains c" were added is referred to as "S(c3)". Similarly, instead of spherical grains a, the grain immobilization index when "plate-like grains d" were added is referred to as "S(d3)". These results are shown in Table 3.

[Table 3]

Table 3

| Grain immobilization index | Grain immobilization index S (%) | | Grain immobilization effect in Example 3 |
|---|---|---|---|
| Described location | Example 3 | | |
| Stabilizer | Stabilizer containing highly dispersible cellulose complex B and guar gum in a weight ratio of 6:4 | | |
| Results | S(a3) | 100 | Yes |
| | S(b3) | 90 | Yes |
| | S(c3) | 100 | Yes |
| | S(d3) | 95 | Yes |

(Example 4)

A composition containing the highly dispersible cellulose complex B and guar gum in a weight ratio of 4:6 was selected. A 0.4% by weight aqueous composition dispersion was prepared in the same manner as in Example 1, and evaluated. This 0.4% by weight aqueous composition dispersion maintained its fluid properties and had not turned into a gel.

Measurement of the theoretical viscosity from the viscosity X4 of the 0.4% by weight aqueous guar gum dispersion (312 mPa·s) and the viscosity Y4 of the 0.4% by weight aqueous highly dispersible cellulose complex B dispersion (2,010 mPa·s) gave a theoretical viscosity $\alpha4$ of 991 mPa·s. In addition, the relationship between the viscosity Z4 of the 0.4% by weight aqueous composition dispersion (2,480 mPa·s) and the theoretical viscosity $\alpha4$ (991 mPa·s) was "viscosity Z4 > theoretical viscosity $\alpha4$", whereby it was determined that this aqueous composition dispersion had a thickening synergistic effect.

When a 0.50% by weight aqueous thickening stabilizer dispersion was prepared in the same manner as in Example 1, the dispersion maintained its fluid properties, had not turned into a gel, and had good liquid drainability. Further, the viscosity ($\eta3\alpha4$) at a rotation speed of 3 rpm was 2,580 mPa·s, and the viscosity ($\eta100\alpha4$) at a rotation speed of 100 rpm was 232 mPa·s. The structural viscosity index (TI$\alpha4$) of this 0.5% by weight aqueous thickening stabilizer dispersion was: TI$\alpha4$ = ($\eta3\alpha4$)/($\eta100\alpha4$) = 11. The structural viscosity index (TI$\beta4$) of a 0.62% by weight aqueous guar gum solution obtained in the same manner as Example 1 was: TI$\beta4$ = ($\eta3\beta4$)/($\eta100\beta4$) = 4. Accordingly, the structural viscosity index (TI$\alpha4$) was greater than the structural viscosity index (TI$\beta4$), whereby it was determined that this aqueous composition dispersion had an effect on structural viscosity formation.

A 0.35% by weight aqueous composition solution was prepared in the same manner as in Example 1 by mixing the above-described 1.0% by weight aqueous composition dispersion and water in a ratio of 3.5:6.5, and then dispersing the resultant solution for another 5 minutes. The grain immobilization index when 20 grains of " spherical grains a" were added to this solution is referred to as "S(a4)". Similarly, instead of spherical grains a, the grain immobilization index when "spherical grains b" were added is referred to as "S(b4)". Similarly, instead of spherical grains a, the grain immobilization index when "plate-like grains c" were added is referred to as "S(c4)". Similarly, instead of spherical grains a, the grain immobilization index when "plate-like grains d" were added is referred to as "S(d4)". These results are shown in Table 4.

[Table 4]

Table 4

| Grain immobilization index | Grain immobilization index S (%) | | Grain immobilization effect in Example 4 |
|---|---|---|---|
| Described location | Example 4 | | |
| Stabilizer | Stabilizer containing highly dispersible cellulose complex B and guar gum in a weight ratio of 4:6 | | |
| Results | S(a4) | 65 | Yes |
| | S (b4) | 65 | Yes |
| | S (c4) | 75 | Yes |
| | S(d4) | 65 | Yes |

(Example 5)

A composition containing the highly dispersible cellulose complex B and glucomannan in a weight ratio of 6:4 was selected. 1.0% by weight and 0.4% by weight aqueous composition dispersions were prepared in the same manner as in Example 1. These dispersions maintained their fluid properties and had not turned into a gel.

Measurement of the theoretical viscosity from the viscosity X5 of this 0.4% by weight aqueous glucomannan dispersion (372 mPa·s) and the viscosity Y5 of the 0.4% by weight aqueous highly dispersible cellulose complex B dispersion (2,010 mPa·s) gave a theoretical viscosity $\alpha5$ of 1,354 mPa·s. In addition, the relationship between the viscosity Z5 of the 0.4% by weight aqueous composition dispersion (3,280 mPa·s) and the theoretical viscosity $\alpha5$ (1,354 mPa·s) was "viscosity Z5 > theoretical viscosity $\alpha5$", whereby it was determined that this aqueous composition dispersion had a thickening synergistic effect.

When a 0.35% by weight aqueous composition dispersion was prepared in the same manner as in Example 1, the dispersion maintained its fluid properties, had not turned into a gel, and had good liquid drainability.

Further, the viscosity ($\eta3\alpha5$) of the 0.35% by weight aqueous composition dispersion at a rotation speed of 3 rpm was 2,890 mPa·s, and the viscosity ($\eta100\alpha5$) at a rotation speed of 100 rpm was 243 mPa·s. The structural viscosity index (TI$\alpha5$) of this 0.35% by weight aqueous thickening stabilizer dispersion was: TI$\alpha5$ = ($\eta3\alpha5$)/($\eta100\alpha5$) = 12. The structural viscosity index (TI$\beta5$) of a 0.67% by weight aqueous glucomannan solution obtained in the same manner as Example 1 was measured to be 2, 910 mPa·s, and ($\eta3\beta5$)/($\eta3\beta5$)was 1.0. Further, the viscosity ($\eta100\beta5$) of this 0.67% by weight aqueous glucomannan solution at a rotation speed of 100 rpm was 1,312 mPa·s. The structural viscosity index (TI$\beta5$) of this 0.67% by weight aqueous glucomannan solution at this stage was: TI$\beta5$ = ($\eta3\beta5$)/($\eta100\beta5$) = 2.

Accordingly, the structural viscosity index (TI$\alpha5$) was greater than the structural viscosity index (TI$\beta5$), whereby it was determined that this aqueous composition dispersion had an effect on structural viscosity formation.

A 0.35% by weight aqueous composition solution was prepared in the same manner as in Example 1 by mixing the above-described 1.0% by weight aqueous composition dispersion and water in a ratio of 3.5:6.5, 5 and then dispersing the resultant solution for another 5 minutes. The grain immobilization index when 20 grains of "spherical grains a" were added to this solution is referred to as "S(a5)". Similarly, instead of spherical grains a, the grain immobilization index when "spherical grains b" were added is referred to as "S(b5)". Similarly, instead of spherical grains a, the grain immobilization index when "plate-like grains c" were added is referred to as "S(c5)". Similarly, instead of spherical grains a, the grain immobilization index when "plate-like grains d" were added is referred to as "S(d5)". These results are shown in Table 5.

[Table 5]

Table 5

| Grain immobilization index | Crain immobilization index S (%) | | Grain immobilization effect in Example 5 |
|---|---|---|---|
| Described location | Example 5 | | |
| Stabilizer | Stabilizer containing highly dispersible cellulose complex B and glucomannan in a weight ratioof 6:4 | | |
| Results | S(a5) | 70 | Yes |
| | S(b5) | 75 | Yes |
| | S(c5) | 80 | Yes |
| | S(d5) | 80 | Yes |

(Example 6)

A composition containing the highly dispersible cellulose complex B and pectin in a weight ratio of 8:2 was selected. A 0.4% by weight aqueous composition dispersion was prepared in the same manner as in Example 1. This dispersion maintained its fluid properties and had not turned into a gel.

Measurement of the theoretical viscosity from the viscosity X6 of this 0.4% by weight aqueous pectin dispersion (1,010 mPa·s) and the viscosity Y6 of the 0.4% by weight aqueous highly dispersible cellulose complex B dispersion (2,010 mPa·s) gave a theoretical viscosity $\alpha 6$ of 1,810 mPa·s. In addition, the relationship between the viscosity Z6 of the 0.4% by weight aqueous composition dispersion (2,210 mPa·s) and the theoretical viscosity $\alpha 6$ (1,810 mPa·s) was "viscosity Z6 > theoretical viscosity $\alpha 6$", whereby it was determined that this aqueous composition dispersion had a thickening synergistic effect.

In addition, a 0.5% by weight aqueous composition dispersion was dispersed in the same manner as in Example 1 at 80°C. The resultant solution was charged with 100 mg of calcium chloride per 1 g of composition, and then dispersed for 2 minutes. The solution was left to stand in the same manner as in Example 1, and then evaluated. This 0.5% by weight aqueous composition dispersion maintained its fluid properties, had not turned into a gel, and had good liquid drainability. Further, the viscosity ($\eta 3\alpha 6$) at a rotation speed of 3 rpm was 2,760 mPa·s, and the viscosity ($\eta 100\alpha 6$) at a rotation speed of 100 rpm was 229 mPa·s. The structural viscosity index (TI$\alpha$) of this 0.5% by weight aqueous composition dispersion was: TI$\alpha 6$ = ($\eta 3\alpha 6$)/($\eta 100\alpha 6$) = 12.

Measurement of the viscosity ($\eta 3\beta 6$) of a 0.78% by weight aqueous pectin dispersion obtained by dispersing the above-described aqueous composition dispersion in the same manner, further adding to this solution 100 mg of calcium chloride per 1 g of composition, dispersing for 2 minutes and then leaving to stand in the same manner as in Example 1, was 2,820 mPa·s, and ($\eta 3\alpha 6$)/($\eta 3\beta 6$) was 1.0. The viscosity ($\eta$)100$\beta 6$ of the 0.78% by weight aqueous pectin solution at a rotation speed of 100 rpm was 317 mPa·s. The structural viscosity index (TI$\beta 6$) of this 0.78% by weight aqueous pectin solution at this stage was: TI$\beta 6$ = ($\eta$)3$\beta 6$/($\eta 100\beta 6$) = 9.

Accordingly, the structural viscosity index (TI$\alpha 6$) was greater than the structural viscosity index (TI$\beta 6$), whereby it was determined that this aqueous composition dispersion had an effect on structural viscosity formation.

A 0.35% by weight aqueous composition solution was prepared in the same manner as in Example 1 by mixing the above-described 1.0% by weight aqueous composition dispersion and water in a ratio of 3.5:6.5, and then dispersing the resultant solution for another 5 minutes. The grain immobilization index when 20 grains of " spherical grains a" were added to this solution is referred to as "S(a6)". Similarly, instead of spherical grains a, the grain immobilization index when "spherical grains b" were added is referred to as "S(b6)". Similarly, instead of spherical grains a, the grain immobilization index when "plate-like grains c" were added is referred to as "S(c6)". Similarly, instead of spherical grains a, the grain immobilization index when "plate-like grains d" were added is referred to as "S(d6)". These results are shown in Table 6.

[Table 6]

Table 6

| Grain immobilization index | Grain immobilization index S (%) | | Grain immobilization effect in Example 6 |
|---|---|---|---|
| Described location | Example 6 | | |
| Stabilizer | Stabilizer containing highly dispersible cellulose complex A and pectin in a weight ratio of 8:2 | | |
| Results | S(a6) | 85 | Yes |
| | S(b6) | 75 | Yes |
| | S(c6) | 90 | Yes |
| | S(d6) | 80 | Yes |

(Example 7)

Using a composition prepared by mixing the highly dispersible cellulose complex B and guar gum in a weight ratio of 6:4 (hereinafter, "composition a"), a fruit sauce A was prepared and evaluated according to the following procedures. A beaker was charged with 14.32% by weight of water and 40% by weight of fructose/glucose syrup ("F-55", manufactured by Oji Cornstarch Co., Ltd.). The resultant solution was heated to 60°C, and then while stirring with a T.K. AUTO HOMO MIXER (manufactured by Primix Corporation), was mixed with a powder consisting of 0.68% by weight of the above-described composition a and 5% by weight of granulated sugar (manufactured by Daiichi-Togyo Co., Ltd.). The resultant mixture was dispersed at 8,000 rpm for 10 minutes, to thereby obtain a fruit sauce A.

The dispersion apparatus was then replaced with a propeller stirring blade, and the mixture was charged with 40% by weight of strawberry puree (prepared by thawing frozen strawberries and then pureeing) which had been sterilized by warming to 80°C. The mixture was then stirred. Once the liquid temperature reached 80°C, stirring was continued for a further 2 minutes to sterilize the mixture, to thereby produce a fruit sauce A'. The fruit sauce A' was filled into three beakers. One of the beakers was left to stand for 24 hours at 25°C. When the beaker was tilted, the sauce flowed and spilled out. This sauce had not turned into a gel. The fruit sauce A' filled into another one of the other beakers was left to stand for 3 hours at 25°C. Measurement showed that viscosity was 19,800 mPa·s and pH was 3.4. The viscosity ($\eta3\alpha7$) at a rotation speed of 3 rpm measured using the fruit sauce A' filled into the remaining two beakers, which had been left to stand for 3 hours at 25°C, was 12,700 mPa·s, and the viscosity ($\eta100\alpha7$) at a rotation speed of 100 rpm was 1,030 mPa·s. The structural viscosity index (TI$\alpha7$) of the fruit sauce A' at this stage was: TI$\alpha7$ = ($\eta3\alpha7$)/($\eta100\alpha7$) = 12, and pH was 3.3. When 1 g of this fruit sauce A' was given to 20 people, the percentage who felt a sense of pasty feeling was 5%, which was very low. Further, 20 blueberry grains (spherical objects having a 17 mm major axis and a 1.4 mm minor - axis prepared by thawing frozen blueberries and then sterilizing by heating at 80°C) per filled vessel were sprinkled in, to thereby produce a fruit sauce A". This fruit sauce A" was cooled for 1 hour at 5°C, and then mixed by vigorously shaking the vessel up and down. The blueberry grain immobilization index S(e7) after being stored for 30 days at 5°C was 100%. These results are shown in Table 7.

[Table 7]

Table 7

| Grain immobilization index | Grain immobilization index U (%) | | Grain immobilization effect in Comparative example 1 |
|---|---|---|---|
| Described location | Comparative example 1 | | |
| Stabilizer | Guar gum | | |
| Results | U(a11) | 0 | No |
| | U(b11) | 0 | No |
| | U(c11) | 5 | No |
| | U(d11) | 0 | No |

(Example 8)

Using the fruit sauce A of Example 7, a soft yogurt B was prepared and evaluated according to the following procedures. In a clean bench, 85% by weight of the below-described yogurt to be stirred and 15% by weight of the fruit sauce A prepared in Example 7 were mixed together. 20 blueberry grains (spherical objects having a 17 mm major axis and a 1.4 mm minor axis prepared by thawing frozen blueberries and then sterilizing by heating at 80°C) per filled vessel were sprinkled thereon. Next, using a propeller stirring blade, the mixture was stirred for 1 minute at 400 rpm at 5°C, and the resultant product was filled into a cup, to thereby produce a soft yogurt B. This was stored for 7 days at 5°C, whereby the blueberry grain immobilization index S(e8) was 80%. The composition a content in the soft yogurt B at this stage was 0.1% by weight.

The soft yogurt B was filled into two beakers. One of the beakers was left to stand for 22 hours at 5°C, and then for another 2 hours at 25°C. When the beaker was tilted, the yogurt flowed and spilled out. This yogurt had not turned into a gel. The soft yogurt B filled into the other beaker was left to stand for 1 hour at 5°C, and then for another 2 hours at 25°C. Measurement showed that viscosity was 2,400 mPa·s and pH was 4.3.

The method of producing the stirring yogurt used here was as follows.

21.7% by weight of water and 75% by weight of milk (3.5% or more milk fat content, non-fat 8.3% milk solids, manufactured by Minami Nihon Rakuno Kyodo Co., Ltd.) were poured into a stainless steel beaker. This mixture was charged with 3.3% by weight of skim milk powder (manufactured by Snow Brand Milk Products Co., Ltd.) while stirring at 200 rpm at 25°C with a propeller stirring blade. The stirring was continued for 10 minutes.

This solution was homogenized at a treatment pressure of 15 MPa using a high-pressure homogenizer. Then, using a propeller stirring blade, stirring was carried out at 200 rpm at 80°C for 30 more minutes to sterilize the solution. Next, in a clean bench, the solution was cooled to 30°C over 20 minutes while stirring at 200 rpm. The solution was sprinkled with 0.32% by weight of a starter ("MSK-Mix A B N 1-45 Visbybac DIP" manufactured by Danisco Coulter) formed as a 0.01% by weight aqueous solution. The resultant mixture was collected with a spatula and filled into a fermentation vessel. The vessel was moved to an incubator, and allowed to ferment for 12 hours at 42°C. After fermentation, the vessel was moved to a refrigerator having a temperature of 5°C, and left for 3 days to thereby produce a yogurt for stirring (9.4% or more non-fat milk solids).

(Example 9)

Using the fruit sauce A of Example 7 and the stirring yogurt of Example 8, a fermented milk drink C was prepared and evaluated according to the following procedures. In a clean bench, 30% by weight of the fruit sauce A of Example 7, 50% by weight of the stirring yogurt of Example 8 and 20% by weight of water were mixed together for 2 minutes at 400 rpm using a propeller stirring blade. The resultant solution was homogenized at a treatment pressure of 15 MPa by a high-pressure homogenizer, and then filled into a heat-resistant vessel. The solution was subjected to a sterilization treatment for 15 minutes in an 85°C hot water bath, to thereby produce a fermented milk drink C. The "thickening agent a" content in the fermented milk drink C at this stage was 0.2% by weight. The fermented milk drink C was filled into three beakers. One of the beakers was left to stand for 23 hours at 5°C, and then for another 1 hour at 25°C. When this beaker was tilted, the fermented milk drink C flowed and spilled out, had not turned into a gel, and had good liquid drainability. The viscosity ($\eta 3\alpha 9$) at a rotation speed of 3 rpm measured using the fermented milk drink B filled into the remaining two beakers, which had been left to stand for 3 hours at 25°C, was 4,600 mPa·s, and the viscosity ($\eta 100\alpha 9$) at a rotation speed of 100 rpm was 235 mPa·s. The structural viscosity index ($TI\alpha 9$) of the fermented milk drink C at this stage was: $TI\alpha 9 = (\eta 3\alpha 9)/(\eta 100\alpha 9) = 20$, and pH was 3.9. The percentage of people who felt a sense of pasty feeling when given the fermented milk drink C in the same manner as in Example 7 was 0%.

(Example 10)

A corn soup D was prepared and evaluated according to the following procedures by blending with the "composition a" used in Example 9. 0.4% by weight of composition a was charged into 88.6% by weight of water while stirring with a T.K. AUTO HOMO MIXER (manufactured by Primix Corporation), and then dispersed for 5 minutes at 7,000 at 80°C. The resultant solution was then charged with 11% by weight of a commercially-available, polysaccharide-free soup (manufactured by Pokka Corporation), and the solution was then dispersed for 5 minutes. The resultant solution was filled into heat-resistant vessels, and 20 corn grains (10 mm major axis, 8 mm minor axis and 5 mm thickness) per heat-resistant vessel were sprinkled thereon. After sterilizing for 10 minutes at 85°C, and then leaving to stand for 1 hour at 25°C, the vessels were vigorously shaken up and down to thereby obtain a corn soup D. The corn soup D had a pH of 6.8 and a dietary salt concentration of 0.73% by weight. After leaving to stand for 7 days at 25°C, the corn grain immobilization index S(f10) was 95%.

These results are shown in Table 8.

[Table 8]

Table 8

| Grain immobilization index | Grain immobilization index U (%) | | Grain immobilization effect in Comparative example 2 |
|---|---|---|---|
| Described location | Comparative example 2 | | |
| Stabilizer | Glucomannan | | |
| Results | U(a12) | 0 | No |
| | U(b12) | 0 | No |
| | U (c12) | 5 | No |
| | U(d12) | 5 | No |

(Comparative example 1)

The liquid drainability of a 0.62% by weight aqueous guar gum solution prepared in the same manner as in Examples 1 and 2, except that guar gum was used in place of the compositions of Examples 1 and 2, was evaluated. When the beaker was tilted and then returned to its original position, the 0.62% by weight aqueous guar gum solution adhered to the lip of the beaker, some threads formed, and liquid drainability was poor.
In addition, a 0.35% by weight aqueous solution was prepared in the same manner as in Examples 1 and 2, except that guar gum was used in place of the compositions described in Examples 1 and 2. The grain immobilization index when 20 grains of "spherical granules a" were added to this dispersion is referred to as "U(a11)". Similarly, instead of spherical grains a, the grain immobilization index when "spherical
grains b" were added is referred to as "U(b11)". Similarly, instead of spherical grains a, the grain immobilization index when "plate-like grains c" were added is referred to as "U(c11)". Similarly, instead of spherical grains a, the grain immobilization index when "plate-like grains d" were added is referred to as "U(d11)". These results are shown in Table 9.

[Table 9]

Table 9

| Grain immobilization index | Grain immobilization index U (%) | | Grain immobilization effect in Comparative example 3 |
|---|---|---|---|
| Described location | Comparative example 3 | | |
| Stabilizer | Pectin | | |
| Results | U(a13) | 0 | No |
| | U(b13) | 0 | No |
| | U(c13) | 0 | No |
| | U(d13) | 0 | No |

(Comparative example 2)

The liquid drainability of a 0.67% by weight aqueous glucomannan solution prepared in the same manner as in Example 5, except that glucomannan was used in place of the composition of Example 5, was evaluated. When the beaker was tilted and then returned to its original position, the 0.67% by weight aqueous glucomannan solution adhered to the lip and to the outer sides of the beaker, and liquid drainability was poor.
In addition, a 0.35% by weight aqueous solution was prepared in the same manner as in Example 5, except that glucomannan was used in place of the composition described in Example 5. The grain immobilization index when 20 grains of "spherical granules a" were added to this dispersion is referred to as "U(a12)". Similarly, instead of spherical grains a, the grain immobilization index when "spherical

grains b" were added is referred to as "U(b12)". Similarly, instead of spherical grains a, the grain immobilization index when "plate-like grains c" were added is referred to as "U(c12)". Similarly, instead of spherical grains a, the grain immobilization index when "plate-like grains d" were added is referred to as "U(d12)".

(Comparative example 3)

The liquid drainability of a 0.78% by weight aqueous pectin solution prepared in the same manner as in Example 6, except that pectin was used in place of the thickening stabilizer of Example 6, was evaluated. When the beaker was tilted and then returned to its original position, the 0.78% by weight aqueous pectin solution adhered to the lip of the beaker, and liquid drainability was poor. Further, gel was formed in some places, and the solution did not flow smoothly. In addition, a 0.35% by weight aqueous solution was prepared in the same manner as in Example 6, except that pectin was used in place of the composition described in Example 6. The grain immobilization index when 20 grains of "spherical granules a" were added to this dispersion is referred to as "U(a13)". Similarly, instead of spherical grains a, the grain immobilization index when "spherical grains b" were added is referred to as "U(b13)". Similarly, instead of spherical grains a, the grain immobilization index when "plate-like grains c" were added is referred to as "U(c13)". Similarly, instead of spherical grains a, the grain immobilization index when "plate-like grains d" were added is referred to as "U(d13)".

(Comparative example 4)

A fruit sauce E was prepared by blending 0.82% by weight of guar gum in place of the 0.6% by weight of "composition a" of Example 7. Further, in the same manner as Example 7, strawberry puree was added to the sauce, and the resultant mixture was treated in a similar manner to thereby produce a fruit sauce E'. The fruit sauce E' was filled into three beakers. When one of the beakers was left to stand under the same conditions as in Example 7, and then tilted and returned to its original position, the fruit sauce E' adhered to the lip of the beaker forming threads, and liquid drainability was poor. The viscosity ($\eta3\beta14$) at a rotation speed of 3 rpm measured using the fruit sauce E' filled into the remaining two beakers, which had been left to stand under the same conditions as in Example 7, was 11,800 mPa·s, and the viscosity ($\eta100\beta14$) at a rotation speed of 100 rpm was 1,950 mPa·s. The structural viscosity index (TI$\beta14$) of the fruit sauce E' at this stage was: TI$\beta14$ = ($\eta3\beta14$)/($\eta100\beta14$) = 6, and pH was 3.3. The viscosity ($\eta3\alpha9$) at a rotation speed of 3 rpm measured using the fruit sauce A of Example 7, which had been left to stand for 3 hours at 25°C, was 12,700 mPa·s, whereby it was established that $\eta3\alpha9/\eta3\beta9$ was 1.1. When 1 g of this fruit sauce A' was respectively given to 20 people, the percentage who felt a sense of pasty feeling was high, at 65%. Further, a fruit sauce E" was prepared by adding per filled vessel 20 grains of the blueberry granules of Example 7 to this fruit sauce E. 90% of the blueberry granules in the fruit sauce E" floated on the liquid surface. The grain immobilization index U (e14) was 10% and pH was 3.5.

(Comparative example 5)

Instead of the fruit sauce A of Example 8, the fruit sauce E of Comparative example 4 was used. That is, in place of "composition a", a soft yogurt F was prepared using guar gum, and then evaluated. 50% of the blueberry granules in the soft yogurt F floated on the liquid surface. The grain immobilization index U(e15) was 50% and pH was 4.2.

(Comparative example 6)

A fermented milk drink G was prepared using guar gum in place of the "composition a" of Example 9. The fermented milk drink G was filled into three beakers. When one of the beakers was left to stand under the same conditions as in Example 9, and then tilted and returned to its original position, the fermented milk drink G adhered to the lip of the beaker, and liquid drainability was poor. The viscosity ($\eta3\beta10$) at a rotation speed of 3 rpm measured using the fermented milk drink G filled into the remaining two beakers, which had been left to stand under the same conditions as in Example 9, was 4,020 mPa·s, and the viscosity ($\eta100\beta10$) at a rotation speed of 100 rpm was 353 mPa·s. The structural viscosity index (TI$\beta10$) of the fermented milk drink G at this stage was: TI$\beta10$ = ($\eta3\beta10$)/($\eta100\beta10$) = 11, and pH was 3.9. The viscosity ($\eta3\alpha10$) at a rotation speed of 3 rpm measured using the fermented milk drink B of Example 9, which had been left to stand for 3 hours at 25°C, was 4,600 mPa·s, whereby it was established that $\eta3\alpha10/\eta3\beta10$ was 1.1. When 1 g of this fermented milk drink G was respectively given to 20 people, the percentage who felt a sense of pasty feeling was 40%, which was higher than in Example 9.

(Comparative example 7)

A corn syrup H was prepared by using guar gum in place of the "composition a" of Example 10, and then evaluated. All of the corn grains in the corn syrup H sedimented to the bottom, so that the grain immobilization index U (f17) was 0%. pH was 6.8, and dietary salt concentration was 0.73% by weight.

(Example 11)

A composition containing the highly dispersible cellulose complex B and guar gum in a weight ratio of 1:9 was selected. A 0.4% by weight aqueous composition dispersion prepared in the same manner as in Example 1 maintained its fluid properties and had not turned into a gel.

Measurement of the theoretical viscosity from the viscosity X7 of this 0.4% by weight aqueous guar gum dispersion (318 mPa·s) and the viscosity Y7 of the 0.4% by weight aqueous highly dispersible cellulose complex B dispersion (2,010 mPa·s) gave a theoretical viscosity $\alpha 7$ of 490 mPa·s. In addition, the relationship between the viscosity Z7 of the 0.4% by weight aqueous composition dispersion (700 mPa·s) and the theoretical viscosity $\alpha 7$ was "viscosity Z7 > theoretical viscosity $\alpha 7$", whereby it was determined that this aqueous composition dispersion had a thickening synergistic effect. Further, the viscosity Z7 (700 mPa·s) of the 0.4% by weight aqueous composition dispersion was at least twice that of the viscosity X7 (318 mPa·s) of the 0.4% by weight aqueous guar gum dispersion. Thus, by simply adding a tiny amount of highly dispersible cellulose, a desired viscosity can be obtained, which holds great promise in terms of cost as a substitute material for food items.

(Comparative example 8)

A composition containing the highly dispersible cellulose complex B and guar gum in a weight ratio of 9:1 was selected. A 0.4% by weight aqueous composition dispersion prepared in the same manner as in Example 1 maintained its fluid properties and had not turned into a gel.

Measurement of the theoretical viscosity from the viscosity X8 of the 0.4% by weight aqueous guar gum dispersion (318 mPa·s) and the viscosity Y8 of the 0.4% by weight aqueous highly dispersible cellulose complex B dispersion (2,010 mPa·s) gave a theoretical viscosity $\alpha 8$ of 1,840 mPa·s. In addition, the relationship between the viscosity Z8 of the 0.4% by weight aqueous composition dispersion (2,350 mPa·s) and the theoretical viscosity $\alpha 8$ was "viscosity Z8 > theoretical viscosity $\alpha 8$", whereby it was determined that this aqueous composition dispersion had a thickening synergistic effect. However, the viscosity Z8 (2,350 mPa·s) of the 0.4% by weight aqueous composition dispersion had only about a 10% thickening synergistic effect compared with the viscosity X8 (2,010 mPa·s) of the 0.4% by weight aqueous highly dispersible cellulose complex B dispersion. Thus, in terms of cost, this does not hold much promise as a substitute material for food items.

INDUSTRIAL APPLICABILITY

The composition according to the present invention comprises a water-dispersible cellulose which is a fine-fibrous cellulose, and at least one kind of polysaccharide, has high grain immobilizing and thickening synergistic effects, can suppress sedimentation and floating of grains in the flesh of a fruit or the like without adversely effecting feeling such as a sense of pasty feeling, and can attain a desired thickening effect using a small amount. In other words, the added amount of thickening agent can be reduced. This quality can be used not only in food-related fields, but also in applications such as pharmaceuticals, cosmetics and the like.

**Claims**

1. A composition comprising a highly dispersible cellulose complex and a polysaccharide in a weight ratio of 1:9 to 8:2, wherein the highly dispersible cellulose complex is a dry composition consisting of:

   i) 50 to 95% by weight of a water-dispersible cellulose;
   ii) 1 to 49% by weight of a water-soluble polymer; and
   iii) 1 to 49% by weight of a hydrophilic substance, the water-dispersible cellulose originating from plant cell walls as a raw material and being a fine-fibrous cellulose having a major axis of 0.5 to 30 $\mu$m, a minor axis of 2 to 600 nm, and a major axis/minor axis ratio of 20 to 400, the water-dispersible cellulose component comprising 10% by weight or more of a component stably suspensible in water, and having a loss tangent of less than 1 when formed as a 0.5% by weight aqueous dispersion.

2. The composition according to claim 1, wherein the highly dispersible cellulose complex is a dry composition consisting of:

> i) 55 to 85% by weight of a water-dispersible cellulose;
> ii) 1 to 30% by weight of a water-soluble polymer; and
> iii) 5 to 40% by weight of a hydrophilic substance.

3. The composition according to claim 1 having a weight ratio of the water-dispersible cellulose: the total of the water-soluble polymer and the hydrophilic substance: the polysaccharide of 0.5:0.5:9 to 7.6:0.4:2.

4. The composition according to claim 1 having a weight ratio of the water-dispersible cellulose: the total of the water-soluble polymer and the hydrophilic substance: the polysaccharide of 0.55:0.45:9 to 6.8:1.2:2.

5. A stabilizer for grain immobilizing which comprises the composition according to any one of claims 1 to 4, wherein the polysaccharide contains at least one selected from the group consisting of galactomannan, glucomannan, sodium alginate, tamarind seed gum, pectin, carrageenan, gellan gum, agar, sodium carboxymethyl cellulose, soybean water-soluble polysaccharide, karaya gum, psyllium seed gum, pullulan, gum arabic, tragacanth gum, gum ghatti, arabinogalactan and curdlan.

6. A stabilizer for grain immobilizing which comprises the composition according to any one of claims 1 to 4, wherein the polysaccharide contains at least one selected from the group consisting of galactomannan, glucomannan, sodium alginate, tamarind seed gum, gellan gum, sodium carboxymethyl cellulose, soybean water-soluble polysaccharide, karaya gum and gum arabic.

7. A thickening agent which comprises the composition according to any one of claims 1 to 4, wherein the polysaccharide contains at least one selected from the group consisting of galactomannan, glucomannan, sodium alginate, tamarind seed gum, pectin, carrageenan, gellan gum, agar, sodium carboxymethyl cellulose, soybean water-soluble polysaccharide, karaya gum, psyllium seed gum, pullulan, gum arabic, tragacanth gum, gum ghatti, arabinogalactan and curdlan.

8. A thickening agent which comprises the composition according to any one of claims 1 to 4, wherein the polysaccharide contains at least one selected from the group consisting of galactomannan, glucomannan, sodium alginate, tamarind seed gum, gellan - gum, sodium carboxymethyl cellulose, soybean water-soluble polysaccharide, karaya gum and gum arabic.

9. The composition according to any one of claims 1 to 4, wherein the water-dispersible cellulose comprises 30% by weight or more of a component stably suspensible in water.

10. The composition according to any one of claims 1 to 4, wherein the composition can easily disperse in an aqueous 0.01% calcium chloride solution.

11. The composition according to any one of claims 1 to 4, wherein the water-dispersible cellulose has a crystallinity exceeding 50%.

12. The composition according to any one of claims 1 to 4, wherein the water-soluble polymer is at least one selected from the group consisting of gum arabic, xanthan gum, sodium carboxymethyl cellulose, gellan gum, and indigestible dextrin.

13. The composition according to any one of claims 1 to 4, wherein the hydrophilic substance is at least one selected from dextrins and trehalose.

14. A food item comprising the composition according to any one of claims 1 to 4, 9 and 10, the stabilizer according to claim 5 or 6, or the thickening agent according to claim 7 or 8.

**INTERNATIONAL SEARCH REPORT**

| International application No. |
| --- |
| PCT/JP2005/022359 |

A.  CLASSIFICATION OF SUBJECT MATTER
*A23L1/05*(2006.01), *A61K9/10*(2006.01), *A61K47/36*(2006.01), *A61K47/38*
(2006.01), *C08L5/00*(2006.01)

According to International Patent Classification (IPC) or to both national classification and IPC

B.  FIELDS SEARCHED

Minimum documentation searched (classification system followed by classification symbols)
*A23L1/05*(2006.01), *A23C9/13*(2006.01), *A23L1/39*(2006.01), *A61K9/10*
(2006.01), *A61K47/36*(2006.01), *A61K47/38*(2006.01), *C08L5/00*(2006.01),
*C08L97/02*(2006.01), *C09K3/00*(2006.01)

Documentation searched other than minimum documentation to the extent that such documents are included in the fields searched
> Jitsuyo Shinan Koho          1922-1996   Jitsuyo Shinan Toroku Koho   1996-2006
> Kokai Jitsuyo Shinan Koho   1971-2006   Toroku Jitsuyo Shinan Koho   1994-2006

Electronic data base consulted during the international search (name of data base and, where practicable, search terms used)

C.  DOCUMENTS CONSIDERED TO BE RELEVANT

| Category* | Citation of document, with indication, where appropriate, of the relevant passages | Relevant to claim No. |
| --- | --- | --- |
| X | JP 2004-41119 A  (Asahi Kasei Chemicals Corp.), 12 February, 2004 (12.02.04), Claims & WO 2004/007558 A1      & AU 2003281045 A1 & KR 2005019838 A        & EP 1553103 A1 | 1-14 |
| X | JP 2004-283135 A  (Asahi Kasei Chemicals Corp.), 14 October, 2004 (14.10.04), Claims; Par. No. [0033] & TW 200401799 A | 1-14 |
| X | JP 2004-313058 A  (Asahi Kasei Chemicals Corp.), 11 November, 2004 (11.11.04), Claims (Family: none) | 1-14 |

| ☒ | Further documents are listed in the continuation of Box C. | ☐ | See patent family annex. |

| | | | |
| --- | --- | --- | --- |
| * | Special categories of cited documents: | "T" | later document published after the international filing date or priority date and not in conflict with the application but cited to understand the principle or theory underlying the invention |
| "A" | document defining the general state of the art which is not considered   to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
| --- | --- |
| 04 January, 2006 (04.01.06) | 31 January, 2006 (31.01.06) |

| Name and mailing address of the ISA/ | Authorized officer |
| --- | --- |
| Japanese Patent Office | |
| Facsimile No. | Telephone No. |

Form PCT/ISA/210 (second sheet) (April 2005)

**INTERNATIONAL SEARCH REPORT**

| International application No. |
| --- |
| PCT/JP2005/022359 |

C (Continuation).   DOCUMENTS CONSIDERED TO BE RELEVANT

| Category* | Citation of document, with indication, where appropriate, of the relevant passages | Relevant to claim No. |
| --- | --- | --- |
| X | JP 2004-248536 A  (Asahi Kasei Chemicals Corp.),<br>09 September, 2004 (09.09.04),<br>Claims<br>(Family: none) | 1-14 |
| X | JP 2000-41627 A  (Asahi Chemical Industry Co.,<br>Ltd.),<br>15 February, 2000 (15.02.00),<br>Claims<br>(Family: none) | 1-14 |
| X | JP 2003-135030 A  (Asahi Kasei Corp.),<br>13 May, 2003 (13.05.03),<br>Claims<br>& WO 2002/96213 A1      & EP 1391154 A1<br>& US 2004-137138 A1     & AU 2002304087 A<br>& CN 1512840 A | 1-14 |
| X | JP 2000-312572 A  (Dai-Ichi Kogyo Seiyaku Co.,<br>Ltd.),<br>14 November, 2000 (14.11.00),<br>Claims<br>(Family: none) | 1-14 |
| X | JP 2000-178377 A  (Asahi Chemical Industry Co.,<br>Ltd.),<br>27 June, 2000 (27.06.00),<br>Claims<br>(Family: none) | 1-14 |
| X | JP 11-253114 A  (Asahi Chemical Industry Co.,<br>Ltd.),<br>21 September, 1999 (21.09.99),<br>Claims<br>& JP 11-253115 A       & WO 99/35190 A1<br>& AU 9917847 A         & EP 1048690 A1<br>& TW 408153 A          & CV 1287564 A<br>& KR 2001033838 A      & US 6495190 B1 | 1-14 |
| X | JP 3247391 B2  (Rodia Chimie),<br>02 November, 2001 (02.11.01),<br>Claims<br>& WO 98/02487 A1       & FR 2751659 A1<br>& AU 9736974 A         & EP 912634 A1<br>& US 2001-004869 A1 | 1-14 |

Form PCT/ISA/210 (continuation of second sheet) (April 2005)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 1731182 A
- JP 60260517 A
- JP 1850006 A
- JP 2001520180 A
- JP 3247391 B
- JP 2004041119 A
- JP 2004248536 A